# EUROPÄISCHE PATENTSCHRIFT

(11) **EP 4 274 452 B1**
(45) Veröffentlichungstag und Bekanntmachung des Hinweises auf die Patenterteilung: **05.03.2025**
(21) Anmeldenummer: 22700301.9
(22) Anmeldetag: 05.01.2022
(51) Int. Cl.: A47J 31/40, B67D 1/00

(54) **KARTUSCHENAUFNAHME, KARTUSCHENSYSTEM, GETRÄNKEZUBEREITUNGSSYSTEM UND VERFAHREN ZUR ZUBEREITUNG EINES GETRÄNKS**
CARTRIDGE RECEPTACLE, CARTRIDGE SYSTEM, BEVERAGE PREPARATION SYSTEM, AND METHOD FOR PREPARING A BEVERAGE
DISPOSITIF DE RÉCEPTION POUR CARTOUCHE, SYSTÈME DE CARTOUCHE, SYSTÈME DE PRÉPARATION DE BOISSONS ET PROCÉDÉ DE PRÉPARATION D'UNE BOISSON

(30) Priorität: 07.01.2021 DE 102021200070
(43) Veröffentlichungstag der Anmeldung: 15.11.2023
(73) Patentinhaber: Freezio AG, 8580 Amriswil (CH)
(72) Erfinder: KRÜGER, Marc, 51467 Bergisch Gladbach (DE); EMPL, Günter, 51429 Bergisch Gladbach (DE)
(74) Vertreter: Kutzenberger Wolff & Partner
(86) Internationale Anmeldenummer: PCT/EP2022/050160
(87) Internationale Veröffentlichungsnummer: WO 2022/148785

(56) Entgegenhaltungen:
- EP-A1- 2 017 220
- EP-A1- 2 017 221
- WO-A1-2015/139062
- WO-A1-2017/121796
- IT-A1- RN20 110 059
- US-A1- 2012 037 662

## Beschreibung

### Stand der Technik

Die Erfindung betrifft eine Kartuschenaufnahme, ein Kartuschensystem, ein Getränkezubereitungssystem sowie ein Verfahren zur Zubereitung eines Getränks.

Solche Systeme sind aus dem Stand der Technik beispielsweise aus den Druckschriften EP 2 017 221 A1, WO 2015 / 139 062 A1, WO 2017 / 121 802 A1, WO 2017 / 121 801 A1, WO 2017 / 121 801 A1, WO 2017 / 121 799 A1, WO 2017 / 121 798 A1, WO 2017 / 121 797 A1, WO 2017 / 121 796 A1 und WO 2019 / 002 293 A1 bekannt und werden zur Herstellung von Getränken aus vorportionierten Kartuschen verwendet. Die Herstellung von Getränken mit solchen Systemen ist für den Anwender äußerst komfortabel, da er lediglich eine Kartusche in die Getränkezubereitungsmaschine einsetzen und eine Startprozedur initiieren muss. Die Getränkezubereitungsmaschine, auch als Dispenser bezeichnet, übernimmt dann vollautomatisiert die Zubereitung des Getränks, d.h. insbesondere, dass das Lebensmittel- oder Getränkesubstrat mit einer vorbestimmten Menge an Flüssigkeit, insbesondere kaltem und karbonisiertem Wasser, vermischt wird und in ein Trinkgefäß geleitet wird. Auf diese Weise lassen sich insbesondere Mixgetränke für den Anwender deutlich einfacher, schneller und mit weniger Aufwand herstellen. Der Anwender kann dabei aus einer Vielzahl von verschiedenen Kartuschen auswählen, so dass er je nach Belieben unterschiedliche Getränke herstellen kann.

Die Kartusche wird zum Einsetzen in die Getränkezubereitungsmaschine in einem Verbindungsbereich mit einer Kartuschenaufnahme verbunden, die ein Interface zur Kopplung mit der Getränkezubereitungsmaschine bereitstellt. Gerade bei der Verwendung von karbonisiertem Wasser kann sich, insbesondere abhängig von dem Volumenstrom und der Temperatur, in der Mischkammer die Kohlensäure insbesondere in Form von Kohlenstoffdioxid aus dem Wasser gelöst werden. Das freigesetzte Gas wird zusammen mit der vermischten Flüssigkeit aus dem Getränkeauslass aus der Kartuschenaufnahme austreten, was zu Störungen im Flüssigkeitsstrom führt. Der Flüssigkeitsstrahl kann gebrochen werden, Blasen enthalten, unregelmäßig austreten und spritzen. Hierdurch kann es zu Verunreinigungen in der direkten Umgebung der Getränkezubereitungsmaschine kommen.

### Offenbarung der Erfindung

Es war daher die Aufgabe der vorliegenden Erfindung, eine Kartuschenaufnahme und ein Kartuschensystem zur Verfügung zu stellen, die die vorgenannten Nachteile nicht aufweisen. Insbesondere soll das Austreten eines homogenen Strahls aus der Kartuschenaufnahme gewährleistet sein.

Gelöst wird die Aufgabe mit einer Kartuschenaufnahme gemäß Anspruch 1, mit einem Kartuschensystem gemäß Anspruch 11, einem Getränkezubereitungssystem gemäß Anspruch 13 und einem Verfahren gemäß Anspruch 15.

Die zu diesem Gegenstand der vorliegenden Erfindung gehörigen Ausführungen gelten auch gleichermaßen für die anderen Gegenstände der vorliegenden Erfindung und umgekehrt. Die vorliegende Erfindung betrifft eine Kartuschenaufnahme zur Herstellung eines Getränks mittels einer Kartusche die ein mit einer Getränkesubstanz gefülltes und durch ein Dichtelement, insbesondere eine Dichtfolie, abgeschlossenes Reservoir umfasst. Die Kartusche weist einen Hohlraum, das Reservoir, auf, in dem sich eine Getränkesubstanz befindet. Diese Getränkesubstanz ist vorzugsweise flüssig und insbesondere ein Konzentrat und ist dazu vorgesehen, mit einer Flüssigkeit, insbesondere Wasser, zur Herstellung des Getränks gemischt zu werden und dann in einem Behälter, insbesondere einem Glas bzw. Becher oder einer Tasse, der vorzugsweise auf einer unterhalb der Kartuschenaufnahme angeordneten Auflage einer Getränkezubereitungsmaschine steht, aufgefangen. Die Getränkesubstanz umfasst vorzugsweise flüssige Pre-Mix-Bestandteile für Erfrischungsgetränke, wie koffein-, kohlensäure-, frucht- und/oder zuckerhaltige Limonaden und Säfte, Bier(misch)getränke oder sonstige alkoholische oder nicht alkoholische (Misch-)Getränke.

Die Kartuschenaufnahme weist einen Verbindungsbereich auf zum Verbinden mit der Kartusche, wobei die Kartuschenaufnahme mit der Kartusche in eine Getränkezubereitungsmaschine einsetzbar ist. Die Kartuschenaufnahme ist vorzugsweise kappenförmig ausgebildet und weist auf der zur Kartusche weisenden Seite eine große, freie Öffnung auf. Vorzugsweise wird die Kartuschenaufnahme vor der Benutzung form-, kraft- und/oder stoffschlüssig mit der Kartusche verbunden, insbesondere mit einem Kartuschenhals. Besonders bevorzugt erfolgt diese Verbindung reversibel oder irreversibel, beispielsweise über einen Schnapp- und/oder Schraubverschluss. Das Dichtelement, insbesondere die Dichtfolie, schließt die Kartusche vorzugsweise an einem offenen Ende ab und ist besonders bevorzugt mit einem freien Rand der Kartusche stoffschlüssig verbunden, beispielsweise an den Rand angesiegelt. Das Dichtelement schließt die Kartusche vorzugsweise luftdicht ab und ist dazu vorgesehen, dass die Getränkesubstanz in dem Reservoir gehalten wird.

Die die Kartuschenaufnahme weist eine mit dem Reservoir in Fluidverbindung bringbare Mischkammer und eine in die Mischkammer mündende Fluidzuführung zum Einleiten von Flüssigkeit in die Mischkammer auf. Diese Mischkammer ist vorzugsweise ein freies Volumen in der Kartuschenaufnahme und grenzt besonders bevorzugt nahthlos an den Verbindungsbereich an, ist also insbesondere über die freie Öffnung der Kartuschenaufnahme zugänglich. Die Fluidzuführung ist vorzugsweise eine Fluidzuführungsöffnung, insbesondere in einer seitlichen Wandung der Kartuschenaufnahme, so dass die Flüssigkeit besonders bevorzugt im Wesentlichen in einem rechten Winkel zu einer Längsachse, die durch die Kartusche und die Kartuschenaufnahme definiert wird, in die Mischkammer eingebracht wird.

Die Kartuschenaufnahme weist eine Kartuschenentladeeinrichtung zum zumindest teilweisen Überführen der Getränkesubstanz vom Reservoir in die Mischkammer auf. Ferner weist die Kartuschenaufnahme einen Getränkeauslass auf zum Ausleiten eines Getränks aus der Mischkammer, insbesondere unmittelbar, in einen Getränkebehälter. Die Kartuschenentladeeinrichtung ist vorzugsweise gezielt aktivierbar, so dass kein versehentliches Überführen der Getränkesubstanz in die Mischkammer erfolgt. Besonders bevorzugt ist die Kartuschenaufnahme derart vorgesehen, dass sie auf der Kartusche montierbar ist und anschließend mit der Kartuschenaufnahme nach unten weisend derart in der Getränkezubereitungsmaschine angeordnet wird, dass das gemischte Getränk aus der Kartuschenaufnahme, insbesondere durch die Schwerkraft, in den Getränkebehälter überführt wird.

Erfindungsgemäß ist nun vorgesehen, dass die Kartuschenaufnahme ferner einen Gasauslass zum Ausleiten eines in der Mischkammer freigesetzten Gases, insbesondere Kohlenstoffdioxid, aus der Kartuschenaufnahme aufweist. Der Gasauslass ist somit separat zu dem Getränkeauslass ausgebildet und vorzugsweise derart konfiguriert, dass ausschließlich während des Mischvorgangs frei gewordenes Gas, insbesondere also weder Flüssigkeit noch das Mischgetränk, in die Umgebung der Kartuschenaufnahme ausgeleitet wird. Hierdurch ist es in besonders vorteilhafter Weise möglich, dass das freigesetzte, also nicht mehr in der Flüssigkeit und/oder dem Getränk gelöste, Gas, den Strahl des ausgeleiteten Getränks nicht negativ beeinflusst und dennoch aus der Kartuschenaufnahme entkommen kann. Gleichzeitig ist sichergestellt, dass keine Flüssigkeit und/oder kein Getränk aus dem Gasauslass austritt. Vorzugsweise ist die Flüssigkeit karbonisiertes Wasser, in diesem Fall ist das Gas insbesondere nicht mehr gelöste Kohlensäure, also Kohlenstoffdioxid.

Vorzugsweise ist die Kartuschenaufnahme ganz oder teilweise aus einem Kunststoffmaterial gefertigt, insbesondere durch ein Injection-Moulding- und/oder ein Blasverfahren. Gemäß einer bevorzugten Ausführungsform ist vorgesehen, dass der Gasauslass und/oder der Getränkeauslass im Wesentlichen kanalförmig, insbesondere längserstreckt, ausgebildet ist und/oder dass die Fluidzuführung eine Fluidzuführungsöffnung ist, die zur Herstellung einer Fluidverbindung mit einer Fluidleitung der Getränkezubereitungsmaschine ausgebildet ist. Besonders bevorzugt erstreckt sich der Gasauslass und/oder der Getränkeauslass im Wesentlichen entlang der Längsachse der Kartusche, wenn Kartuschenaufnahme und Kartusche verbunden sind. Ganz besonders bevorzugt ist die Länge des Getränkeauslasses geringer als die Länge des Gasauslasses. Da insbesondere auf der Auslassseite der Gasauslass und der Getränkeauslass im Wesentlichen in einer gleichen Ebene angeordnet sind, bedeutet dies insbesondere, dass die Öffnung des Gasauslasses in der Mischkammer gemäß der üblichen Anordnung während der Getränkezubereitung höher liegt als die Öffnung des Getränkeauslasses. Somit ist in vorteilhafter Weise sichergestellt, dass nur Gas und keine Flüssigkeit aus dem Gasauslass austritt.

Gemäß einer bevorzugten Ausführungsform ist vorgesehen, dass der Gasauslass im Wesentlichen parallel zu dem Getränkeauslass angeordnet ist. Besonders bevorzugt erstrecken sich der Gasauslass und der Getränkeauslass im Wesentlichen entlang der Längsachse der Kartusche, wenn Kartuschenaufnahme und Kartusche verbunden sind. Durch die parallele Ausgestaltung ist die Kartuschenaufnahme insbesondere einfacher herzustellen.

Gemäß einer bevorzugten Ausführungsform ist vorgesehen, dass der Gasauslass im Wesentlichen mittig in der Kartuschenaufnahme angeordnet ist. Hierdurch ist es vorteilhafterweise möglich, dass Gas von allen Bereichen der Mischkammer gleichermaßen einfach durch den Gasauslass ausströmen kann.

Gemäß einer bevorzugten Ausführungsform ist vorgesehen, dass eine Öffnung des Getränkeauslasses größer ist als eine Öffnung des Gasauslasses, wobei der Getränkeauslass insbesondere wenigstens abschnittsweise eine größere Querschnittsfläche aufweist als der Gasauslass. Die Kartuschenaufnahme ist vorzugsweise derart ausgebildet, dass in der Mischkammer im Wesentlichen eine laminare Strömung vorliegt. Dadurch, dass insbesondere eine turbulente Strömung weitgehend vermieden wird, tritt weniger Gas aus der Flüssigkeit aus und es wird lediglich ein kleiner Durchmesser für den Gasauslass benötigt. Durch den relativ zu dem Gasauslass größeren Durchmesser des Getränkeauslasses wird währenddessen vorteilhafterweise eine ausreichend schnelle Getränkezubereitung und gleichzeitig eine gute Vermischung der Flüssigkeit mit der Getränkesubstanz gewährleistet.

Gemäß einer bevorzugten Ausführungsform ist vorgesehen, dass die zum Dichtelement weisende Öffnung des Gasauslasses einen geringeren Abstand zu dem Dichtelement aufweist als die zum Dichtelement weisende Öffnung des Getränkeauslasses. Hierdurch wird in vorteilhafter Weise gewährleistet, dass die Öffnung des Gasauslasses oberhalb des Flüssigkeitsspiegels in der Mischkammer liegt, so dass sichergestellt ist, dass während der Getränkezubereitung nur Gas aus dem Gasauslass treten kann. Besonders bevorzugt ist vorgesehen, dass der Abstand zwischen der zum Dichtelement weisenden Öffnung des Gasauslasses und dem Dichtelement zwischen 0,1mm und 1,0mm, vorzugsweise zwischen 0,3mm und 0,8mm, insbesondere zwischen 0,4mm und 0,6mm, beträgt. Ganz besonders bevorzugt ist vorgesehen, dass der Abstand zwischen der zum Dichtelement weisenden Öffnung des Gasauslasses und dem Dichtelement zwischen 5% und 50%, vorzugsweise zwischen 10% und 40%, insbesondere zwischen 20% und 30%, des Abstands zwischen der zum Dichtelement weisenden Öffnung des Getränkeauslasses und dem Dichtelement beträgt. Dabei ist insbesondere das Dichtelement in einer Ruhelage gemeint, d.h. ohne eine schwerkraft- und/oder druckbedingte Wölbung des Dichtelements. Der Fachmann versteht, dass, insbesondere im Fall einer Dichtfolie als Dichtelement, ein ausreichend großer Abstand zwischen der Öffnung des Gasauslasses und dem Dichtelement vorliegen muss, damit auch unter Druck noch eine ausreichend große Öffnung für das freigesetzte Gas vorliegt und andererseits ein geringer Abstand sicherstellt, dass der Gasauslass von der in der Mischkammer strömenden Flüssigkeit derart beabstandet ist, dass keine Flüssigkeit/Getränkesubstanz bzw. kein Getränk aus dem Gasauslass austritt.

Gemäß einer bevorzugten Ausführungsform ist vorgesehen, dass die Kartuschenentladeeinrichtung einen Druckluftanschluss und eine Druckluftleitung umfasst, welche sich vom Druckluftanschluss zu einem Druckluftauslass erstreckt, wobei der Druckluftauslass insbesondere in Richtung des Reservoirs der Kartusche vorsteht, wobei der Druckluftanschluss dazu ausgebildet ist, Druckluft in das Reservoir einzuleiten, wobei die Kartuschenentladeeinrichtung derart ausgebildet ist, dass die Getränkesubstanz durch die Druckluft aus dem Reservoir in die Mischkammer überführbar ist. Besonders bevorzugt ist der Druckluftanschluss als Öffnung in einer Wandung der Kartuschenaufnahme ausgebildet. Ganz besonders bevorzugt ist die Öffnung benachbart zu Fluidzuführung angeordnet. Hierdurch ist es vorteilhafterweise möglich, dass die Druckluft und die Flüssigkeit im gleichen Bereich und vorzugsweise durch ein Element der Getränkezubereitungsmaschine der Kartuschenaufnahme zugeführt werden. Die Druckluft wird während der Zubereitung vorzugsweise im Wesentlichen gleichzeitig mit der Flüssigkeit zugeführt, so dass Flüssigkeit und Getränkesubstanz zum gleichen Zeitpunkt in die Mischkammer gelangen und sich dort vermischen. Der Fachmann versteht, dass je nach Ausgestaltung auch ein geringer zeitlicher Versatz vorliegen kann, um ein vollständiges Vermischen in der Mischkammer zu erreichen. Die Druckluft drückt, insbesondere zusammen mit der Schwerkraft, die Getränkesubstanz aus dem Reservoir und verhindert, dass in dem Reservoir ein Unterdruck entsteht, der ein vollständiges Entleeren des Reservoirs verhindern könnte.

Gemäß einer bevorzugten Ausführungsform ist vorgesehen, dass die Kartuschenentladeeinrichtung eine Dornführung und einen innerhalb der Dornführung, insbesondere in einer Richtung, verschiebbar gelagerten Aufstechdorn umfasst, wobei der Aufstechdorn zwischen einer eingefahrenen Position, in welcher der Aufstechdorn von dem Dichtelement beabstandet ist, und einer ausgefahrenen Position, in welcher der Aufstechdorn das Dichtelement durchsticht und bis in das Reservoir ragt, insbesondere durch ein Aktuatorelement der Getränkezubereitungsmaschine, verschiebbar ist, wobei vorzugsweise die Druckluftleitung in den Aufstechdorn integriert ist. Hierdurch wird in besonders vorteilhafter Weise ermöglicht, dass die Kartusche gezielt durchstochen werden kann und die Getränkezubereitung somit gezielt ausgelöst werden kann, wobei mit dem Aufstechdorn ein einziges Element das Dichtelement durchstößt und gleichzeitig die Druckluft zuführt. Vorzugsweise weist der Aufstechdorn an seiner Außenseite wenigstens einen, insbesondere längserstreckten Kanal auf. Hierdurch wird in besonders einfacher und zuverlässiger Weise ein Ausfluss der Getränkesubstanz aus dem Reservoir ermöglicht. Alternativ oder zusätzlich weist der Aufstechdorn an seinem äußeren Umfang mindestens eine, vorzugsweise mehrere Ein- und/oder Ausbuchtungen auf, die als Ablauf für die Getränkesubstanz vorgesehen sind. Die Menge und die Größe der Ein- und/oder Ausbuchtungen hängt vorzugsweise von der Viskosität des Substrats ab. Die Außenwandung des Aufstechmittels ist also vorzugsweise mit wenigstens einem Seitenkanal zum Leiten der Getränkesubstanz in Richtung der Mischkammer versehen. Insbesondere kann durch den seitlich am Aufstechdorn ausgebildeten Seitenkanal die Getränkesubstanz dann an der Membran vorbei in Richtung der Mischkammer fließen. Vorzugsweise sind eine Mehrzahl von Seitenkanälen am Aufstechdorn ausgebildet. Die Seitenkanäle sind insbesondere jeweils in Form einer einseitig offenen Nut ausgebildet. Denkbar ist, dass der Querschnitt der Seitenkanäle und/oder die Anzahl der Seitenkanäle an die Viskosität des Substrats angepasst ist, so dass die Seitenkanäle den Fluss des Substrats in Richtung Mischkammer kontrollieren bzw. begrenzen. Bei einer hohen Viskosität werden mehrere Seitenkanäle oder Seitenkanäle mit größerem Querschnitt verwendet, während bei einer niedrigeren Viskosität weniger Seitenkanäle oder Seitenkanäle mit geringerem Querschnitt vorgesehen sind. Der Fachmann versteht, dass dies insbesondere bedeutet, dass für jede Getränkesubstanz und somit für verschiedene Arten von Kartuschen eine passende Kartuschenaufnahme vorgesehen ist. Diesen Ausführungsform ist gemein, dass sind besonders vorteilhaft sind, da der Aufstechdorn das einzige bewegliche Element der Kartuschenaufnahme ist und die Kartuschenaufnahme somit einfach aufgebaut und einfach herstellbar ist. Vorzugsweise besteht nur in der ausgefahrenen Position eine Fluidverbindung zwischen dem Druckluftanschluss zu dem Druckluftauslass. Insbesondere kann in der eingefahrenen Position keine Druckluft aus dem Druckluftauslass treten. Hierdurch wird in besonders vorteilhafter Weise sichergestellt, dass nur in der ausgefahrenen Position, d.h. wenn das Dichtelement durchstochen ist, Druckluft aus dem Druckluftauslass gelangt.

Gemäß einer bevorzugten Ausführungsform ist vorgesehen, dass der Gasauslass, der Getränkeauslass und/oder die Dornführung einen im Wesentlichen kreisförmigen Querschnitt aufweisen. Alternativ weist Gasauslass, der Getränkeauslass und/oder die Dornführung einen eckigen Querschnitt auf. Ein kreisförmiger Querschnitt ist dabei besonders einfach herzustellen und ist für eine laminare Strömung besonders vorteilhaft. Besonders bevorzugt ist der Querschnitt über die gesamte Länge des Gasauslasses, des Getränkeauslasses und/oder der Dornführung konstant. Alternativ variiert der Querschnitt über die Länge, beispielsweise vergrößert sich der Querschnitt in Strömungsrichtung.

Gemäß einer bevorzugten Ausführungsform ist vorgesehen, dass der Gasauslass zwischen der Dornführung und/oder der Fluidzuführung und dem Getränkeauslass angeordnet ist. Um ein vollständiges Vermischen der Flüssigkeit mit der Getränkesubstanz zu gewährleisten, muss die Flüssigkeit vorzugsweise einen ausreichend langen Weg zwischen der Fluidzuführung und dem Getränkeauslass zurücklegen. Daher ist der Bereich zwischen Fluidzuführung und Getränkeauslass vorzugsweise derart vorgesehen, dass dort kein Flüssigkeitsstrom stattfindet. Daher ist die Anordnung des Gasauslasses in diesem Bereich besonders vorteilhaft.

Gemäß einer bevorzugten Ausführungsform ist vorgesehen, dass der Abstand zwischen der zum Dichtelement weisenden Öffnung des Gasauslasses und dem Dichtelement zwischen 10% und 80%, vorzugsweise zwischen 30% und 60%, insbesondere im Wesentlichen 50%, des Abstands zwischen der zum Dichtelement weisenden Öffnung der Dornführung und dem Dichtelement beträgt. Dabei steht der Aufstechdorn vorzugsweise wenigstens in der ausgefahrenen Position über die Öffnung der Dornführung hervor.

Gemäß einer bevorzugten Ausführungsform ist vorgesehen, dass die Kartuschenaufnahme und insbesondere der Getränkeauslass einen Residuumauslass umfasst, wobei die Querschnittsfläche des Residuumauslasses vorzugsweise 2% bis 30%, besonders bevorzugt 5% bis 20%, insbesondere 10%, der Querschnittsfläche des Getränkeauslasses beträgt. Besonders bevorzugt ist der Residuumauslass im tiefsten Punkt der Kartuschenaufnahme, insbesondere in der Ausrichtung während der Getränkezubereitung, angeordnet. Hierdurch wird in vorteilhafter Weise sichergestellt, dass auch letzte Flüssigkeits- bzw. Getränkereste aus der Kartuschenaufnahme entfernt werden, so dass kein Totvolumen verbleibt und die Kartuschenaufnahme und die Kartusche nach der Getränkezubereitung aus der Getränkezubereitungsmaschine entnommen werden können, ohne dass in der Kartuschenaufnahme verbliebene Flüssigkeit austreten, insbesondere tropfen, kann. Somit wird eine hygienische und saubere Getränkezubereitung ermöglicht.

Gemäß einer bevorzugten Ausführungsform ist vorgesehen, dass der Getränkeauslass ein Strahlformelement umfasst, wobei das Strahlformelement insbesondere kreuzförmig ausgebildet ist. Der Fachmann versteht, dass das Strahlformelement auch eine andere Form aufweisen kann und insbesondere in Stromrichtung im unteren Bereich des Getränkeauslasses angeordnet ist. Das Strahlformelement ist besonders bevorzugt derart vorgesehen, dass das Getränk in einem homogenen Strahl, insbesondere mit einer laminaren Strömung, aus dem Getränkeauslass tritt.

Gemäß einer bevorzugten Ausführungsform ist vorgesehen, dass der Gasauslass wenigstens ein Abstandsmittel zum Einhalten eines Mindestabstands zu dem Dichtelement aufweist, wobei das Abstandsmittel vorzugsweise kreisbogenabschnittsförmig ausgebildet ist. Durch das Abstandsmittel wird in vorteilhafter Weise sichergestellt, dass auch bei hohem Druck und einer damit einhergehenden Wölbung des Dichtelements, eine ausreichend große Öffnung des Gasauslasses gegeben ist.

Gemäß einer bevorzugten Ausführungsform ist vorgesehen, dass die Kartuschenaufnahme in einem der Fluidzuführung zugewandten Bereich ein Strömungsformungselement aufweist, um eine laminare Strömung einer durch die Fluidzuführung in die Mischkammer geleiteten Flüssigkeit zu gewährleisten. Das Strömungsformungselement ist insbesondere bugförmig ausgebildet. Es sorgt in vorteilhafter Weise dafür, dass die in die Mischkammer einströmende Flüssigkeit sich aufteilt, insbesondere ohne in eine turbulente Strömung überzugehen.

Ein weiterer Gegenstand der vorliegenden Erfindung ist ein Kartuschensystem zur Herstellung eines Getränks, wobei das Kartuschensystem in eine Getränkezubereitungsmaschine einsetzbar ist, mit einer Kartusche, die ein mit einer Getränkesubstanz gefülltes Reservoir umfasst, und einer mit der Kartusche verbundene erfindungsgemäße Kartuschenaufnahme, wobei die Kartuschenaufnahme und die Kartusche in einem Verbindungsbereich miteinander verbunden sind, wobei die Kartusche eine Kartuschenöffnung aufweist, wobei die Kartuschenöffnung in einem Randbereich ein Dichtelement, insbesondere eine Dichtfolie, aufweist, wobei das Dichtelement das Reservoir fluiddicht gegenüber der Kartuschenaufnahme abschließt. Dabei ist das Kartuschensystem vorzugsweise durch einen Benutzer montierbar. Alternativ ist das Kartuschensystem bereits werkseitig montiert. Die Verbindung zwischen Kartusche und Kartuschenaufnahme ist ganz bevorzugt reversibel. Alternativ ist die Verbindung irreversibel oder zumindest nicht zerstörungsfrei reversibel.

Die zu diesem Gegenstand der vorliegenden Erfindung gehörigen Ausführungen gelten auch gleichermaßen für die anderen Gegenstände der vorliegenden Erfindung und umgekehrt.

Die Kartusche ist vorzugsweise ganz oder teilweise aus einem Kunststoffmaterial gefertigt, insbesondere durch ein Injection-Moulding- und/oder ein Blasverfahren. Die Kartusche weist eine Seitenwand auf, die beispielsweise einen runden, rechteckigen, quadratischen, konischen oder ovalen Querschnitt aufweist. An einem Ende der Seitenwand ist in der Regel ein Boden vorgesehen, der insbesondere einstückig mit der Seitenwand gefertigt ist. Die Seitenwand und gegebenenfalls der Boden spannen einen Hohlraum auf, der das Reservoir bildet, in dem die Getränkesubstanz, insbesondere in flüssiger Form, vorgesehen ist. An dem anderen Ende der Seitenwand weist die Kartusche eine Öffnung auf, die durch einen Verbindungsbereich begrenzt, über den die Kartusche mit der Kartuschenaufnahme verbunden wird. Vorzugsweise umfasst der Verbindungsbereich wenigstens einen Flansch. Der Flansch ragt aus dem Verbindungsbereich hervor und steht vorzugsweise in einem Winkel, insbesondere einem rechten Winkel, von einem Wandbereich des Verbindungsbereichs ab. Vorzugsweise ist der Flansch aus Vollmaterial, d.h. nicht hohl gefertigt. Insbesondere ist der Flansch und/oder der Verbindungsbereich einstückig mit der Seitenwand ausgebildet. Besonders bevorzugt weist der Flansch ein Positioniermittel auf. Das Positioniermittel stellt sicher, dass die Kartusche nur in einer bestimmten Position, insbesondere in einem bestimmten Drehwinkel, insbesondere bezogen auf die Längsachse der Kartusche, mit der Kartuschenaufnahme verbunden werden kann. Ganz besonders bevorzugt ist das Positioniermittel eine Ein- und/oder Ausbuchtung, die aus dem Flansch, insbesondere dessen Umfang, hervorsteht. Vorzugsweise ist das Positioniermittel einstückig mit dem Flansch vorgesehen. Beispielsweise ist das Positioniermittel als Vorsprung ausgebildet, der an einer Stelle an den Umfang des Flanschs angeformt ist. Die Dicke des Positioniermittels entspricht dabei besonders bevorzugt zumindest im Wesentlichen der Dicke des Flansches.

Gemäß einer bevorzugten Ausführungsform ist zwischen dem Wandbereich und dem Verbindungsbereich ein Kartuschenhals vorgesehen. Dieser Kartuschenhals weist vorzugsweise einen runden Querschnitt, insbesondere jedoch den gleichen Querschnitt wie die Seitenwand der Kartusche, auf. Der Kartuschenhals stellt den Wandbereich des Verbindungsbereichs dar. Der Flansch schließt sich vorzugsweise rechtwinklig an den Hals an.

Gemäß einer bevorzugten Ausführungsform ist das Dichtelement, insbesondere die Dichtfolie, die die Kartusche vor deren Gebrauch, insbesondere hermetisch, verschließt, an dem Flansch, insbesondere dessen Stirnfläche, befestigt, insbesondere gesiegelt. Dafür kann der Flansch, insbesondere dessen Stirnfläche, eine Wulst, insbesondere eine kreisringförmige Wulst, aufweisen, die beim Siegeln mit dem Siegelwerkzeug zusammenwirkt. Vorzugsweise ist der äußere Durchmesser der Membran geringer als der Durchmesser des Flansches. Vorzugsweise ist im Bereich im Wandbereich des Verbindungsbereichs und/oder im Bereich des Kartuschenhalses ein Befestigungsmittel vorgesehen. Besonders bevorzugt ist die Kartusche über dieses Befestigungsmittel mit der Kartuschenhalterung verbindbar. Das Befestigungsmittel ist insbesondere eine Nut, in die ein Verriegelungsmittel der Kartuschenhalterung eingreift.

Gemäß einer bevorzugten Ausführungsform ist vorgesehen, dass der Verbindungsbereich der Kartusche, insbesondere abdichtend, mit dem Verbindungsbereich der Kartuschenaufnahme zusammenwirkt. Besonders bevorzugt ist vorgesehen, dass der Umfang des Flansches der Kartusche in eine Nut in der Kartuschenaufnahme eingreift. Diese Flansch-Nut-Verbindung wirkt insbesondere derart form- und/oder kraftschlüssig, dass keine Relativbewegung zwischen der Kartusche und der Kartuschenaufnahme während der Getränkezubereitung auftritt. Hierdurch wird vorteilhafterweise ausgeschlossen, dass die Verbindung zwischen Kartusche und Kartuschenaufnahme undicht wird.

Gemäß einer bevorzugten Ausführungsform ist vorgesehen, dass die Kartusche und die Kartuschenaufnahme drehfest miteinander verbunden sind.

Gemäß einer bevorzugten Ausführungsform weist die Kartusche eine Kennung auf, anhand derer sie identifiziert werden kann. Sobald die Kartusche erkannt ist, sind vorzugsweise Informationen über die Getränkesubstanz und/oder die empfohlene Zubereitung verfügbar. Analoges gilt für den Behälter, in dem das Getränk oder Lebensmittel aufgefangen wird. Auch dieses kann Informationen und/oder eine Kennung aufweisen. Besonders bevorzugt weist die Kartusche und/oder die Kartuschenaufnahme eine Produktidentifikationskennung auf. Vorzugsweise ist die Produktidentifikationskennung in einen Barcode, einen RFID-Code, einen QR-Code, einen Data-Matrix-Code, einen Farbcode, einen Hologrammcode oder dergleichen eingebettet. In vorteilhafter Weise wird somit ein automatisches Auslesen der Produktidentifikationskennung möglich. Alternativ wäre denkbar, dass die Produktidentifikationskennung auch in andere automatisch auslesbare Computerchips eingebettet wird. Der Begriff QR-Code umfasst im Sinne der vorliegenden Erfindung insbesondere jedweden Data-Matrix-Code. Insofern werden die Begriff QR-Code und Data-Matrix-Code synonym verwendet. Alternativ oder zusätzlich wäre auch denkbar, dass die Produktidentifikationskennung einen Strichcode, einen Punktcode, einen Binärcode, einen Morsecode, Braillezeichencode (Blindenschrift) oder dergleichen umfasst. Der Code kann dabei auch in eine dreidimensionale Struktur, wie beispielweise ein Relief eingebettet sein. Die Produktidentifikationskennung umfasst insbesondere die sogenannte Produktidentifikationsnummer, insbesondere einen Universal Product Code (UPC), eine European Article Number (EAN), einen GS1-Code, eine Global Trade Item Number (GTIN) oder dergleichen. Auf diese Weise braucht hierfür kein neues Codesystem eingeführt werden. Insbesondere läuft die Produktidentifikationskennung unter dem GS1-Standard. Die Produktidentifikationskennung ist vorzugsweise direkt auf die Kartusche gedruckt, geklebt und/oder in die Oberfläche der Kartusche eingebracht, bspw. durch eine (Laser-)Gravur, Stanzen oder direkt bei der Herstellung der Kartusche. Alternativ wäre auch denkbar, dass die Kartusche mit einem Überzug, beispielsweise einem Sleeve, zumindest teilweise umhüllt wird, auf welchem die Produktidentifikationskennung angeordnet ist. Der Überzug kann mit der Kartusche auch verklebt oder verschweißt sein. Der Überzug oder das Sleeve könnten aus einer Kunststofffolie, einem Textil oder Papier hergestellt sein.

Noch ein weiterer Gegenstand der vorliegenden Erfindung ist ein Getränkezubereitungssystem mit einer Getränkezubereitungsmaschine und einem erfindungsgemäßen Kartuschensystem, wobei die Getränkezubereitungsmaschine eine, insbesondere balkonartig ausgebildete, Kartuschenhalterung umfasst, in die das Kartuschensystem einsetzbar ist, wobei die Getränkezubereitungsmaschine ferner ein Flüssigkeitsreservoir, ein Flüssigkeitskonditionierungssystem zum Konditionieren einer Flüssigkeit aus dem Flüssigkeitsreservoir, insbesondere zum Heizen, Kühlen und/oder Karbonisieren der Flüssigkeit, ein Aktuatorelement zur Betätigung der Kartuschenentladevorrichtung, insbesondere des Aufstechdorns, ein Fluidzuführungssystem welches mit dem Kartuschensystem koppelbar ist und dazu vorgesehen ist, die konditionierte Flüssigkeit durch die Fluidzuführung in die Mischkammer einzubringen und vorzugsweise Druckluft an dem Druckluftanschluss in die Druckluftleitung einzubringen, und eine Steuerungseinrichtung zum Steuern des Flüssigkeitskonditionierungssystems, des Fluidzuführungssystems und/oder des Aktuatorelements umfasst. Das erfindungsgemäße Getränkezubereitungssystem ist besonders vorteilhaft, da auf einfache und hygienische Weise eine Vielzahl von unterschiedlichen Getränken schnell zubereitet werden können. Die Kartuschenhalterung ist dabei bevorzugt balkonartig ausgebildet. Damit ist insbesondere gemeint, dass sie von dem Gehäuse der Getränkezubereitungsmaschine absteht, insbesondere horizontal. Das Kartuschensystem wird vorzugsweise von oben in die Kartuschenhalterung eingesetzt und das Getränk fällt besonders bevorzugt unmittelbar von der Kartuschenaufnahme, also insbesondere ohne ein beliebiges Element der Getränkezubereitungsmaschine zu berühren, in den Getränkebehälter. Insbesondere ist die Kartuschenhalterung im Wesentlichen scheibenförmig ausgebildet. Hierdurch wird nicht nur eine besonders hygienische Getränkezubereitung, sondern auch eine sehr hohe Variabilität der Kartuschen ermöglicht. Das Interface zwischen der Kartuschenhalterung und dem Kartuschensystem wird in Form der Kartuschenaufnahme bereitgestellt. Da die Kartusche oberhalb der Kartuschenhalterung angeordnet ist, kann sie eine fast beliebige Form aufweisen. Vorzugsweise weist die Kartuschenhalterung einen, insbesondere beweglich angeordneten, Flüssigkeitsanschluss auf. Mit diesem Flüssigkeitsanschluss wird die Flüssigkeit zur Herstellung des Getränks zur Verfügung gestellt. Der Flüssigkeitsanschluss der Halterung wird vorzugsweise mit der Fluidzuführung in der Kartuschenaufnahme, insbesondere flüssigkeitsdicht, in Verbindung gebracht.

Die zu diesem Gegenstand der vorliegenden Erfindung gehörigen Ausführungen gelten auch gleichermaßen für die anderen Gegenstände der vorliegenden Erfindung und umgekehrt.

Gemäß einer bevorzugten Ausführungsform ist vorgesehen, dass das Flüssigkeitsreservoir lösbar in die Getränkezubereitungsmaschine eingesetzt ist. Auf diese Weise kann das Flüssigkeitsreservoir, beispielsweise zum Befüllen, aus der Getränkezubereitungsmaschine entnommen werden. Besonders bevorzugt ist die Flüssigkeit Wasser. Alternativ oder zusätzlich ist die Getränkezubereitungsmaschine mit einer externen Flüssigkeitsversorgung, insbesondere einer Wasserversorgung, verbindbar. Beispielsweise kann das Flüssigkeitsreservoir, insbesondere automatisch, durch die externe Wasserversorgung gefüllt werden und/oder die benötigte Flüssigkeit wird direkt der externen Wasserversorgung entnommen. Hierdurch ist in vorteilhafter Weise der Bedienkomfort der Getränkezubereitungsmaschine gesteigert. Vorzugsweise weist die Getränkezubereitungsmaschine wenigstens eine Pumpe, insbesondere eine Membranpumpe, zur Förderung der Flüssigkeit auf. Besonders bevorzugt weist die Getränkezubereitungsmaschine ferner wenigstens einen Durchflussmesseinrichtung zur Erfassung und Steuerung des Flüssigkeitsvolumenstroms, insbesondere einen Durchflusssensor, beispielsweise einen Ultraschalldurchflusssensor oder einen magnetisch-induktivem Durchflusssensor, auf.

Gemäß einer bevorzugten Ausführungsform ist vorgesehen, dass das Flüssigkeitskonditionierungssystem wenigstens eine Temperiervorrichtung zum Temperieren der Flüssigkeit aufweist. Besonders bevorzugt ist die Temperiervorrichtung ein Kühlaggregat zum Kühlen der Flüssigkeit. Alternativ ist die Getränkezubereitungsmaschine mit einer externen Temperiervorrichtung koppelbar. In vorteilhafter Weise sind somit Kaltgetränke herstellbar, auch wenn die Kartusche selbst nicht gekühlt ist und beispielweise Zimmertemperatur aufweist. Das Kühlaggregat umfasst vorzugsweise eine Kompressorkühleinheit, eine Absorberkühleinheit oder einen thermoelektrischen Kühler. Gemäß einer weiteren bevorzugten Ausführungsform der vorliegenden Erfindung ist vorgesehen, dass das Flüssigkeitskonditionierungssystem wenigstens einen Karbonisierer umfasst, um der Flüssigkeit Kohlensäure zuzusetzen. Besonders bevorzugt ist vorgesehen, dass die Getränkezubereitungsmaschine den Karbonisierer aufweist und ferner eine Aufnahme für wenigstens ein Kohlenstoffdioxidreservoir, insbesondere eine Kohlenstoffdioxidpatrone, aufweist. Vorteilhafterweise lassen sich mit dem System somit auch mit Kohlensäure versetzte (Erfrischungs-) Getränke herstellen. Alternativ ist die Getränkezubereitungsmaschine mit einer externen Kohlenstoffdioxidquelle koppelbar.

Gemäß einer bevorzugten Ausführungsform ist vorgesehen, dass das Aktuatorelement wenigstens einen Vorsprung aufweist, der formschlüssig und/oder kraftschlüssig in ein unteres Ende des Aufstechdorns eingreift und diesen in Richtung der Kartusche bei einer Aktivierung derart innerhalb der Dornführung verschiebt, dass der Aufstechdorn das Dichtelement durchsticht. Besonders bevorzugt umfasst die Getränkezubereitungsmaschine einen Antrieb für das Aktuatorelement. Ganz besonders bevorzugt ist der Antrieb innerhalb eines Gehäuses der Getränkezubereitungsmaschine und somit insbesondere nicht in der Kartuschenhalterung angeordnet und durch eine geeignete Mechanik mit dem Aktuatorelement in der Kartuschenhalterung verbunden.

Gemäß einer bevorzugten Ausführungsform ist vorgesehen, dass das Fluidzuführungssystem eine Pumpe, insbesondere eine Membranpumpe, zur Förderung der Flüssigkeit umfasst. Besonders bevorzugt umfasst das Fluidzuführungssystem ferner wenigstens einen Durchflussmesseinrichtung zur Erfassung und Steuerung des Flüssigkeitsvolumenstroms, insbesondere einen Durchflusssensor, beispielsweise einen Ultraschalldurchflusssensor oder einen magnetisch-induktivem Durchflusssensor. Ganz besonders bevorzugt umfasst das Fluidzuführungssystem ein bewegliches Koppelelement, welches insbesondere eine integrierte Druckluftleitung und/oder eine integrierte Flüssigkeitsleitung aufweist und derart beweglich vorgesehen ist, dass eine fluiddichte Kopplung mit der Fluidzuführung und/oder dem Druckluftanschluss der Kartuschenaufnahme erfolgt, wenn das Kartuschensystem in der Kartuschenhalterung eingesetzt ist. Alternativ ist das Koppelelement unbeweglich vorgesehen und derart ausgebildet, dass eine fluiddichte Kopplung mit der Fluidzuführung und/oder dem Druckluftanschluss der Kartuschenaufnahme erfolgt, wenn das Kartuschensystem in der Kartuschenhalterung eingesetzt ist.

Gemäß einer bevorzugten Ausführungsform ist vorgesehen, dass die Getränkezubereitungsmaschine und/oder das Fluidzuführungssystem eine Druckluftquelle aufweist. Alternativ ist die Getränkezubereitungsmaschine und/oder das Fluidzuführungssystem mit einer externen Druckluftquelle koppelbar. Insbesondere ist dabei die Getränkezubereitungsmaschine derart vorgesehen, dass der Druckluftanschluss der Kartuschenaufnahme mit Druckluft beaufschlagt wird, sobald eine Kopplung des Koppelelements mit dem Druckluftanschluss erfolgt oder sobald das Aktuatorelement das Aufstechmittel aktiviert. Auf diese Weise wird in vorteilhafter Weise sichergestellt, dass die Getränkesubstanz ohne Verzögerung bei Durchstechen des Dichtelements in die Mischkammer überführt wird und insbesondere keine Getränkesubstanz in die Druckluftleitung eintritt und es auf diese Weise zu einer Verunreinigung der Getränkezubereitungsmaschine mit der Getränkesubstanz kommt.

Gemäß einer bevorzugten Ausführungsform ist vorgesehen, dass die Getränkezubereitungsmaschine ferner einen Kennungsdetektor zum Erkennen einer Kennung der Kartusche und/oder der Kartuschenaufnahme aufweist. Besonders bevorzugt ist der Kennungsdetektor oberhalb und/oder hinter der Kartuschenhalterung angeordnet, insbesondere in einem Gehäuse der Getränkezubereitungsmaschine oberhalb der Kartuschenhalterung. Der Kennungsdetektor umfasst insbesondere einen optischen Sensor, wie beispielsweise eine CCD-Kamera, welche die Kennung, insbesondere die Produktidentifikationskennung, automatisch ausliest, wenn das Kartuschensystem in die Getränkezubereitungsmaschine eingesetzt ist. Alternativ umfasst der Kennungsdetektor eine Sende- und Empfangsantenne zum automatischen Auslesen beispielsweise eines RFID-Codes.

Gemäß einer bevorzugten Ausführungsform ist vorgesehen, dass die Getränkezubereitungsmaschine ein Verriegelungsmittel aufweist, um das Kartuschensystem in der Kartuschenhalterung reversibel zu verriegeln, wobei das Verriegelungsmittel durch einen Benutzer betätigbar ist. Besonders bevorzugt ist das Verriegelungsmittel derart mit der Steuerungseinrichtung verbunden, dass ein Getränkezubereitungsvorgang erst bei erfolgreicher Verriegelung des Kartuschensystems in der Kartuschenhalterung möglich ist. Auf diese Weise wird eine eventuelle Fehlfunktion und eine Beschädigung des Kartuschensystems und/oder der Getränkezubereitungsmaschine verhindert und eine Verunreinigung durch austretende Flüssigkeit und/oder Getränkesubstanz vermieden. Ganz besonders bevorzugt umfasst das Verriegelungsmittel einen Befestigungsflansch, welcher die Kartuschenaufnahme beim oder nach dem Einsetzen in den Halter formschlüssig und/oder kraftschlüssig umgreift. Der Befestigungsflansch umfasst vorzugsweise ferner eine Auslösemechanik, die derart konfiguriert ist, dass eine Betätigung der Auslösemechanik zu einem Umgreifen der Kartuschenaufnahme durch den Befestigungsflansch führt und/oder zu einem Verschieben des Befestigungsflansches derart, dass eine Relativbewegung zwischen der Kartuschenaufnahme und dem in Kontakt mit dem Aufstechmittel stehenden Aktuatorelement erzeugt wird, wodurch das Aufstechmittel von der eingefahrenen Position in die ausgefahrene Position überführt wird. Die Auslösemechanik umfasst beispielsweise einen Handhebel zur manuellen Betätigung derselben, wobei vorzugsweise der Handhebel um eine zur Längsachse der Kartusche im Wesentlichen parallele Drehachse drehbar ausgebildet ist. Ferner umfasst die Auslösemechanik vorzugsweise ein Übersetzungsgetriebe, welche eine Drehbewegung des Handhebels um die zur Längsachse parallele Drehachse in eine zur Längsachse im Wesentlichen parallele Translationsbewegung übersetzt. Nachdem das Kartuschensystem in die Halterung eingesetzt wurde, wird der Handhebel durch den Benutzer betätigt, wodurch das Kartuschensystem fest umgriffen und linear gegen das Auslöseelement verschoben wird. Durch die Verdrehsicherung und die Übersetzung der Drehbewegung in die lineare Translationsbewegung wird sichergestellt, dass die Ortientierung der Kartusche relativ Kartuschenhalterung konstant bleibt. Hierdurch wird eine eventuelle Erkennung einer (Produktidentifikations-)Kennung vorteilhafterweise vereinfacht.

Ein weiterer Gegenstand der vorliegenden Erfindung ist ein Verfahren zur Zubereitung eines Getränks mit einem erfindungsgemäßen Getränkezubereitungssystem, gekennzeichnet durch die folgenden Schritte:
- Einsetzen eines aus einer Kartusche und einer Kartuschenaufnahme zusammengesetzten Kartuschensystems in die Kartuschenhalterung,
- Herstellen einer Fluidverbindung zwischen dem Fluidzuführungssystem und der Kartuschenaufnahme,
- Aktivieren des Aktuatorelements zum Betätigen der Kartuschenentladeeinrichtung, insbesondere durch Überführen des Aufstechdorns von der eingefahrenen Position in die ausgefahrene Position, wodurch ein Perforieren des Dichtmittels bewirkt wird,
- Überführen der Getränkesubstanz von dem Reservoir der Kartusche in die Mischkammer der Kartuschenaufnahme, insbesondere durch Einspeisen von Druckluft in die Kartusche durch den Druckluftanschluss,
- Einbringen einer Flüssigkeit in die Mischkammer der Kartuschenaufnahme durch die Fluidzuführung und
- Ableiten des in der Mischkammer durch Vermischung der Getränkesubstanz mit der Flüssigkeit erzeugten Getränks durch den Getränkeauslass,
- Ableiten von während der Vermischung freigesetztem Gas, insbesondere Kohlenstoffdioxid, durch den Gasauslass.

Die zu diesem Gegenstand der vorliegenden Erfindung gehörigen Ausführungen gelten auch gleichermaßen für die anderen Gegenstände der vorliegenden Erfindung und umgekehrt.

Durch das erfindungsgemäße Verfahren wird vorteilhafterweise in hygienischer und schneller Weise eine Getränkezubereitung bzw. Getränkeherstellung ermöglicht, die in höchster Weise flexibel ist, da die einzige Bedingung ist, dass die Getränkesubstanz und die Flüssigkeit vermischbar sind. Durch den, insbesondere separaten, Gasauslass wird sichergestellt, dass freigesetztes Gas nicht den austretenden Getränkevolumenstrom stört und somit unerwünschte Effekte wie ein teilweise unterbrochener Strahl, Spritzer, Blasen und dergleichen vermieden werden. Der Fachmann versteht, dass die Menge des freigesetzten Gases von einer Vielzahl von Parametern wie Temperatur, Druck, Volumenstrom, Viskosität der Getränkesubstanz und/oder Flüssigkeit und Grad der Karbonisierung abhängt. Der Gasauslass ist jedoch vorzugsweise derart vorgesehen, dass jede vernünftig zu erwartende Gasmenge sicher ausgeleitet werden kann.

Gemäß einer bevorzugten Ausführungsform ist vorgesehen, dass das Überführen der Getränkesubstanz in die Mischkammer und das Einbringen der Flüssigkeit in die Mischkammer im Wesentlichen gleichzeitig erfolgt. Hierdurch wird sichergestellt, dass ein homogenes Getränk entsteht und in den Getränkebehälter überführt wird. Insbesondere ist es in der Regel nicht wünschenswert, wenn Flüssigkeit und Getränkesubstanz wenigstens teilweise getrennt aus der Kartuschenaufnahme fließen.

Gemäß einer bevorzugten Ausführungsform ist vorgesehen, dass die Flüssigkeit vor dem Einbringen in die Mischkammer in der Getränkezubereitungsmaschine temperiert, insbesondere gekühlt, und karbonisiert wird. Hierdurch wird vorteilhafterweise die Zubereitung eines karbonisierten, gekühlten Erfrischungsgetränks ermöglicht.

Gemäß einer bevorzugten Ausführungsform ist vorgesehen, dass das Aktivieren des Aktuatorelements ein Verschieben des Aufstechdorns entlang der Dornführung umfasst. Dabei ist entscheidend, dass eine Relativbewegung zwischen dem Aktuatorelement der Kartuschenhalterung bzw. der Getränkezubereitungsmaschine erfolgt, wobei dies eine Bewegung des Kartuschensystems und/oder des Aktuatorelements umfassen kann.

Gemäß einer bevorzugten Ausführungsform ist vorgesehen, dass sich an das Einsetzen des Kartuschensystems in die Kartuschenhalterung ein Verriegelungsschritt anschließt, in welchem ein Verriegelungsmittel automatisch oder manuell betätigt wird. Besonders bevorzugt ist vorgesehen, dass beim oder nach dem Einsetzen des Kartuschensystems in die Halterung ein Befestigungsflansch der Kartuschenhalterung von einer manuell oder motorisch betätigbaren Auslösemechanik derart betrieben wird, dass die Kartuschenaufnahme form- und/oder kraftschlüssig von dem Befestigungsflansch umgriffen wird und/oder dass der Befestigungsflansch derart verschoben wird, dass eine Relativbewegung zwischen der Kartuschenaufnahme und dem in Wirkverbindung mit der Kartuschenentladeeinrichtung stehenden Aktuatorelement erzeugt wird, wodurch das Aufstechmittel von der eingefahrenen Position in die ausgefahrene Position überführt wird.

Gemäß einer bevorzugten Ausführungsform ist vorgesehen, dass das Herstellen einer Fluidverbindung zwischen dem Fluidzuführungssystem und der Kartuschenaufnahme eine Relativbewegung zwischen einem beweglichen Koppelelement und der Kartuschenaufnahme umfasst, so dass eine fluiddichte Verbindung erzeugt wird. Besonders bevorzugt wird dabei gleichzeitig eine Fluidverbindung zwischen einer maschinenseitigen Flüssigkeitsleitung und der Fluidzuführung der Kartuschenaufnahme und eine Fluidverbindung zwischen einer maschinenseitigen Druckluftleitung und dem Druckluftanschluss der Kartuschenaufnahme hergestellt.

Gemäß einer bevorzugten Ausführungsform ist vorgesehen, dass das Überführen der Getränkesubstanz von dem Reservoir der Kartusche in die Mischkammer der Kartuschenaufnahme derart erfolgt, Druckluft durch die Kartuschenentladeeinrichtung in das Reservoir der Kartusche eingebracht wird, wodurch die Getränkesubstanz insbesondere außen an dem Aufstechdorn durch das Dichtelement in die Mischkammer fließt. Die Druckluft kann dabei wahlweise lediglich das austretende Volumen der Getränkesubstanz kompensieren, um einen Unterdruck in der Kartusche zu verhindern, oder die Druckluft kann die Getränkesubstanz aktiv aus dem Reservoir verdrängen, so dass das Überführen von dem Reservoir in die Mischkammer mit erhöhtem Druck, insbesondere relativ zu einem Druck in dem Reservoir für der Getränkezubereitung und/oder relativ zu einem Umgebungsdruck, erfolgt.

Gemäß einer bevorzugten Ausführungsform ist vorgesehen, dass das Einbringen der Flüssigkeit in die Mischkammer derart erfolgt, dass eine überwiegend, insbesondere ausschließlich, laminare Strömung vorliegt. Der Fachmann versteht, dass dies von verschiedenen Parametern abhängt, wie beispielsweise der Temperatur, dem Grad der Karbonisierung, der Geschwindigkeit des Volumenstroms, dem Querschnitt des Volumenstroms, wobei besonders bevorzugt die Steuerungseinrichtung der Getränkezubereitungsmaschine die maschinenseitigen Parameter derart anpasst, insbesondere durch das Fluidkonditionierungs- und/oder -zuführungssystem, dass eine laminare Strömung vorliegt. Hierdurch kann in vorteilhafter Weise ein erhöhtes Freisetzen von Gas vermieden werden.

Gemäß einer weiteren bevorzugten Ausführungsform der vorliegenden Erfindung ist vorgesehen, dass zeitlich vor, während oder nach dem Einsetzen des Kartuschensystems in die Kartuschenhalterung und/oder des Einspeisens von Druckluft in die Kartusche und/oder des Einspeisens der Flüssigkeit in die Mischkammer und/oder der Betätigung der Kartuschenentladeeinrichtung wenigstens eine Kennung, insbesondere eine Produktidentifikationskennung, der Kartusche und/oder der Kartuschenaufnahme von dem Kennungsdetektor ausgelesen wird. Die ausgelesene Produktidentifikationskennung wird vorzugsweise von einer Auswerteeinheit ausgewertet, wobei das Einspeisen der Druckluft und/oder der Flüssigkeit und/oder das Betätigen der Kartuschenentladeeinrichtung nur dann erfolgt, wenn die Produktidentifikationskennung von der Auswerteeinheit verifiziert werden wird. Auf diese Weise wird sichergestellt, dass das Getränkezubereitungssystem nur mit bekannten oder für die Getränkezubereitungsmaschine zertifizierten bzw. freigegebenen Kartuschensystemen in Betrieb genommen werden kann, so dass eine Beschädigung der Getränkezubereitungsmaschine oder eine Verletzungsgefahr des Benutzers aufgrund der versehentlichen Verwendung falscher Kartuschensysteme, welche beispielsweise dem Druck der Druckluft und/oder der Flüssigkeit nicht standhalten können, vermieden werden. Denkbar ist dabei auch, dass die Eigenschaften des eingespeisten Verdünnungsmittels und insbesondere der zeitliche Verlauf des Volumenstroms, Gesamtvolumen, Druck, Förderpausen, Temperatur und/oder Karbonisierung der eingespeisten Flüssigkeit in Abhängigkeit der Produktidentifikationskennung gesteuert werden. Alternativ oder zusätzlich werden auch die Eigenschaften der eingespeisten Druckluft und insbesondere der zeitliche Verlauf des Volumenstroms, Gesamtvolumen, Förderpausen und/oder Druck der eingespeisten Druckluft in Abhängigkeit der Produktidentifikationskennung gesteuert. Vorzugsweise wird auch das Verhältnis zwischen dem Volumenstrom der Flüssigkeit und dem Volumenstrom der Druckluft in Abhängigkeit der Produktidentifikationskennung gesteuert. In die Produktidentifikationskennung sind insbesondere sämtliche Parameter der Getränkesubstanz bzw. der Getränkezubereitung und/oder durch die Getränkezubereitungsmaschine einstellbare Parameterbereiche des Getränkeherstellungsprozesses eingebettet, so dass die Getränkezubereitungsmaschine von der Kartusche sämtliche Informationen erhält, welche für die Herstellung des jeweiligen Getränks notwendig oder zumindest hilfreich sind. Denkbar ist auch, dass diese Informationen in einem internen Speicher der Getränkezubereitungsmaschine abgelegt sind und mit Hilfe der Produktidentifikationskennung für das jeweilige Kartuschensystem abgerufen und zur Steuerung des Getränkeherstellungsprozesses verwendet werden, sobald die Anwesenheit dieses Kartuschensystems in der Kartuschenhalterung detektiert wird.

### Figurenbeschreibung

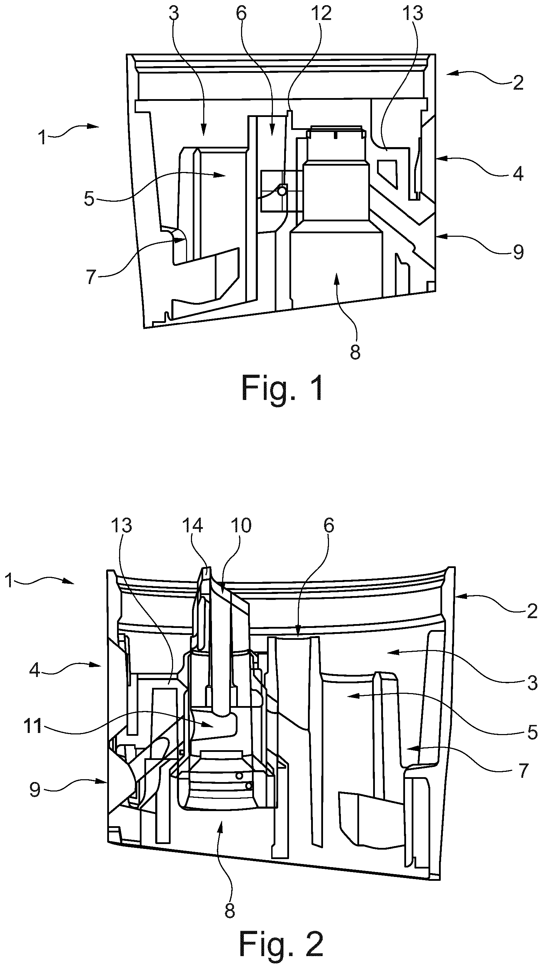

Im Folgendem wird die Erfindung anhand der Figuren 1 bis 6 erläutert. Diese Erläuterungen sind lediglich beispielhaft und schränken den allgemeinen erfindungsgemäßen Gedanken nicht ein. Die Erläuterungen gelten für die erfindungsgemäße Kartusche, das erfindungsgemäße Kartuschensystem, das erfindungsgemäße Getränkezubereitungssystem und für das erfindungsgemäße Verfahren gleichermaßen.
- **Figuren 1 und 2**: zeigen schematische Querschnitte einer Kartuschenaufnahme gemäß beispielhafter Ausführungsformen der vorliegenden Erfindung.
- **Figur 3**: zeigt eine Kartuschenaufnahme.
- **Figur 4**: zeigt eine Ansicht einer Kartuschenaufnahme gemäß einer beispielhafter Ausführungsformen der vorliegenden Erfindung.
- **Figuren 5 und 6**: zeigen schematische Querschnitte eines Kartuschensystems, eines Getränkezubereitungsystems und eines Verfahrens gemäß einer beispielhaften Ausführungsform der vorliegenden Erfindung.

In **Figur 1** ist ein schematischer Querschnitt einer Kartuschenaufnahme 1 gemäß einer beispielhaften Ausführungsform der vorliegenden Erfindung dargestellt. Eine derartige Kartuschenaufnahme 1 ist insbesondere kappenartig ausgebildet und wird auf eine Kartusche 16 montiert, um ein Kartuschensystem zu bilden.

Die Kartusche 16, die hier der Übersichtlichkeit halber nicht dargestellt ist, umfasst dabei eine Seitenwand und einen mit der Seitenwand verbundenen, vorzugsweise einstückig damit ausgebildeten, Boden. An dem dem Boden gegenüberliegenden Ende weist die Kartusche eine Öffnung auf, die vorzugsweise von einem Kartuschenhals umgeben wird, der besonders bevorzugt einen geringeren Durchmesser als die Seitenwand hat. An dem offenen Ende weist die Kartusche 16 vorzugsweise wenigstens einen, insbesondere rechtwinklig zur Längsachse der Kartusche 16 ausgerichteten, Flansch 18 auf. Dieser Flansch 18 ist zum einen dazu vorgesehen, eine kraft- und/oder formschlüssige Verbindung mit einem Verbindungsbereich 2 der Kartuschenaufnahme 1 einzugehen. Zum anderen wird vorzugsweise an den Flansch 18 ein Dichtelement befestigt.

Gemäß den hier erläuterten Ausführungsformen handelt es sich bei dem Dichtelement um eine Dichtfolie 19, die beispielsweise an den Flansch 18 angesiegelt wird und dadurch Hohlraum in der Kartusche 16 abschließt, insbesondere fluiddicht, d.h. u.a. flüssigkeits- und luftdicht. Der Hohlraum dient dabei als Reservoir 17 für eine, vorzugsweise flüssige, Getränkezubstanz. Der Fachmann versteht, dass anstelle eine Getränkesubstanz auch eine, insbesondere flüssige, Lebensmittelsubstanz sein kann, wie beispielsweise Babynahrung, Brei, Suppe, oder medizinische Produkte wie Hochkaloriennahrung. Entscheidend ist, dass die (Getränke-)Substanz dazu vorgesehen ist, mit einer Flüssigkeit, insbesondere Wasser, vermischt zu werden.

Die Kartusche 16 und insbesondere die Seitenwand können dabei im Wesentlichen eine beliebige Form aufweisen, beispielsweise einen runden oder eckigen Querschnitt, und Abmessungen, insbesondere Länge und Durchmesser, in einem weiten möglichen Bereich. Einzig der Kartuschenhals muss derart ausgebildet sein, dass er in einem Verbindungsbereich mit dem Verbindungsbereich 2 der Kartuschenaufnahme verbindbar ist. Es ist ein besonderer Vorteil des erfindungsgemäßen Getränkezubereitungssystems, dass die Kartuschenhalterung 24 der Getränkezubereitungsmaschine vorzugsweise balkonartig ausgebildet ist. Dies meint insbesondere, dass die Kartuschenhalterung 24 von einem Gehäuse der Getränkezubereitungsmaschine, insbesondere im Wesentlichen horizontal, absteht und im Wesentlichen scheibenförmig ausgebildet ist. Das Kartuschensystem aus Kartusche 16 und Kartuschenaufnahme 1 wird kopfüber, also derart, dass die Öffnung der Kartusche 16 nach unten weist und die Kartuschenaufnahme 1 das unterste Element des Kartuschensystems ist, in die Kartuschenhalterung eingesetzt und dort vorzugsweise reversibel verriegelt. Dies bedeutet, dass die Kartusche 16 nach oben frei aus der Kartuschenhalterung 24 hinausragt und daher frei in ihrer Formgestaltung ist.

Die Kartuschenaufnahme 1 weist im Verbindungsbereich 2 eine Öffnung auf, die unmittelbar an das Dichtelement, hier die Dichtfolie 19, angrenzt. Am gegenübergesetzten Ende weist die Kartuschenaufnahme 1 erfindungsgemäß wenigstens zwei Öffnungen auf. Die eine Öffnung ist ein Getränkeauslass 5, über den das fertige, vermischte Getränk austreten kann und vorzugsweise unmittelbar in einen Getränkebehälter wie eine Tasse, einen Becher oder ein Glas überführt wird. Der Getränkeauslass 5 ist vorzugsweise kanalartig ausgebildet, d.h. er umfasst seitliche Wände eine Längserstreckung. Dabei ist die Länge des Getränkeauslasses 5 insbesondere derart gewählt, dass ein gerichteter und homogener Getränkestrahl erzeugt wird. Besonders bevorzugt umfasst der Getränkeauslass hierzu auch ein Strahlformelement 15, beispielsweise ein Kreuz, welches im unteren Bereich angeordnet ist und dazu ausgebildet ist, den Strahl wunschgemäß zu formen.

In einer Seitenwand der Kartuschenaufnahme 1 ist eine Fluidzuführung 4 vorgesehen, die hier als Loch, insbesondere mit einer konischen Umrandung, ausgebildet ist. Diese Fluidzuführung 4 wirkt in der Getränkezubereitungsmaschine mit einem Koppelelement 20 zusammen, durch welches eine Flüssigkeit, insbesondere gekühltes und/oder karbonisiertes Wasser, durch die Fluidzuführung 4 in die Kartuschenaufnahme 1 eingebracht wird.

Das freie Volumen in der Kartuschenaufnahme 1 dient dabei als Mischkammer 3, in der die Getränkesubstanz mit der einströmenden Flüssigkeit vermischt wird und somit das gewünschte Getränk bildet, bevor es durch den Getränkeauslass 5 austritt.

Wie der Abbildung entnommen werden kann, liegt eine obere Öffnung des Getränkeauslasses 5, damit eine für die Strahlformung ausreichende Länge erzielt wird, oberhalb eines unteren Bereichs der Mischkammer 3. Damit dennoch das in der Mischkammer 3 erzeugte Getränk restlos aus der Kartuschenaufnahme 1 ausgeleitet werden kann und insbesondere somit ein Nachtropfen bei einer Entnahme des Kartuschensystems aus der Getränkezubereitungsmaschine sowie ein verbleibendes, nicht nutzbares Totvolumen vermieden werden kann weist die Kartuschenaufnahme 1 ferner ein Residuumauslass 7, auf, der insbesondere am tiefsten Punkt der Mischkammer (in der Orientierung wie sie in der in der Getränkezubereitungsmaschine montierten Anordnung vorliegt) vorgesehen ist. Besonders bevorzugt ist der Residuumauslass 7 benachbart zu dem Getränkeauslass 5 vorgesehen und/oder wenigstens teilweise Teil des Getränkeauslasses 5. Hier ist beispielsweise der Getränkeauslass 5 derart vorgesehen, dass er einen im Wesentlichen kreisrunden Querschnitt aufweist, wobei jedoch ein kleiner Bereich des Querschnitts in einem Bereich des Umfangs als Residuumauslass 7 ausgebildet ist. Insbesondere ist die obere Eintrittsfläche des Residuumauslasses 7 niedriger angeordnet als die obere Eintrittsfläche des Getränkeauslasses 5. Daraus folgt vorliegend auch, dass die Länge und die Querschnittsfläche des Residuumauslasses 7 deutlich kleiner ist als die Länge und die Querschnittsfläche des Getränkeauslasses 5, da der Residuumauslass 7 lediglich zur Ausleitung eines verhältnismäßig geringen Restvolumens vorgesehen ist.

Um die Getränkesubstanz von dem Reservoir 17 in die Mischkammer 3 zu überführen weist die Kartuschenaufnahme 1 eine Kartuschenentladeeinrichtung auf. Die Kartuschenaufnahme 1 weist unterhalb der Fluidzuführung 4 einen Druckluftanschluss 9 auf, der hier ebenfalls eine konische Umrandung aufweist, um mit einer Druckluftzuführung der Getränkezubereitungsmaschine zusammenzuwirken, so dass Druckluft in die Kartuschenaufnahme 1 eingebracht werden kann. Vorzugsweise umfasst das maschinenseitige Koppelelement 20 sowohl eine Druckluftleitung 21 als auch eine Flüssigkeitsleitung 22, so dass das Koppelelement 20 mit beiden Öffnungen, der Fluidzuführung 4 und dem Druckluftanschluss 9, insbesondere gleichzeitig, koppelbar ist. Von dem Druckluftanschluss 9 wird die Druckluft in Richtung einer Dornführung 8 geleitet. Diese ist hier als Öffnung ausgebildet, die formschlüssig einen hier nicht dargestellten Aufstechdorn 14 derart aufnimmt, dass dieser zwischen einer eingefahrenen Position und einer ausgefahrenen Position längsverschiebbar ist. Der Druckluftanschluss 9, die Dornführung 8 und der Aufstechdorn 14 sind dabei Teil der Kartuschenentladeeinrichtung.

Dabei ist der Aufstechdorn 14 derart vorgesehen, dass er mit einem Aktuatorelement 23 der Getränkezubereitungsmaschine, insbesondere der Kartuschenhalterung 24, zusammenwirkt, so dass der Aufstechdorn 14 von seiner eingefahrenen Position in die ausgefahrene Position überführbar ist. In der ausgefahrenen Position perforiert der Aufstechdorn 14 die Dichtfolie 19, so dass die Getränkesubstanz, insbesondere über wenigstens einen an dem Außenumfang des Aufstechdorns 14 angeordneten, nutförmigen Kanal durch die Dichtfolie 19 in die Mischkammer 3 fließen kann. Da durch die Anordnung des Kartuschensystems und die Ausbildung der Kartuschenaufnahme 1 sonst ein Unterdruck in dem Reservoir 17 der Kartusche 16 entstehen würde oder könnte, weist der Aufstechdorn 14 eine interne Druckluftleitung 11 auf, die in der Spitze des Aufstechdorns 14 in einem Druckluftauslass 10 mündet, wobei der Aufstechdorn 14 und insbesondere die Druckluftleitung 11 derart ausgebildet ist, dass nur in der ausgefahrenen Position die Druckluftleitung 11 mit dem Druckluftanschluss 9 in Fluidverbindung steht. Hierdurch wird sichergestellt, dass nicht versehentlich Druckluft in die Mischkammer 3 eingebracht wird. Die Druckluft wird während der Zubereitung in das Reservoir 17 eingebracht und ersetzt dort das durch den Ausfluss der Getränkesubstanz in die Mischkammer 3 frei gewordene Volumen. Vorzugsweise wird die Druckluftzufuhr dabei durch eine Steuerungseinrichtung der Getränkezubereitungsmaschine derart gesteuert, dass die Druckluft die Überführung der Getränkesubstanz in die Mischkammer zusätzlich unterstützt, d.h. ein, insbesondere geringer, Überdruck in der Kartusche 16 aufgebaut wird.

Alternativ oder zusätzlich ist auch denkbar, dass die Getränkezubereitungsmaschine die Druckluftzufuhr derart steuert, dass gegen Ende der Getränkezubereitung ein Restvolumen der Getränkesubstanz, der Flüssigkeit und/oder des Getränks über den Residuumauslass 7 aus dem Kartuschensystem ausgetrieben wird.

Ferner weist die Kartuschenaufnahme 1 hier ferner ein der Fluidzuführung zugewandtes Strömungsformungselement 13 auf, welches vorzugsweise bugförmig ausgebildet ist. Das Strömungsformungselement 13 ist dazu vorgesehen, den eintretenden Flüssigkeitsstrom aufzuteilen und insbesondere gleichmäßig in die Mischkammer 3 zu verteilen. Insbesondere soll vermieden werden, dass eine turbulente Strömung auftritt, da dies eine homogene Vermischung der Flüssigkeiten erschwert und da in einer turbulenten Strömung gerade bei karbonisiertem Wasser ein erhöhtes Ausgasen der Kohlensäure in die Umgebung, insbesondere als Kohlenstoffdioxid, stattfindet. Bei Beibehaltung einer weitgehend laminaren Strömung wird dieses Freisetzen von Gas minimiert. Der Fachmann versteht, dass dieses Ausgasen unter anderem temperatur-, druck-, und strömungsgeschwindigkeitsabhängig ist.

In der Regel wird dennoch ein gewisses Volumen von Gas, insbesondere Kohlenstoffdioxid, in der Mischkammer freigesetzt. Dieses Gas könnte beispielsweise durch den Getränkeauslass 5 in die Umgebung austreten und dabei jedoch den Getränkestrahl stören. So kann es beispielsweise zu einem intermittierenden Strahl kommen, zu Spritzern oder Blasen. Dies ist nicht wünschenswert. Daher weist die Kartuschenaufnahme 1 erfindungsgemäß ferner einen Gasauslass 6 auf, der insbesondere separat von dem Getränkeauslass 5 ausgebildet ist. Separat meint dabei insbesondere, dass Flüssigkeit und/oder Gas ab der Mischkammer 3 stromabwärts nicht von dem Getränkeauslass 5 in den Gasauslass 6 und umgekehrt gelangen kann, es gibt also keine Löcher oder Fluidverbindungen zwischen den beiden vorzugsweise kanalartig ausgebildeten Auslässen. Damit sichergestellt ist, dass wiederum keine Flüssigkeit, also weder die eingebrachte Flüssigkeit, noch die Getränkesubstanz oder das fertige Getränke, über den Gasauslass 6 austritt, sondern das Getränk primär über den Getränkeauslass 5 und sekundär über den, kleineren, Residuumauslass 7 abgeführt wird, ist eine obere Eintrittsfläche des Gasauslasses 6, wie hier abgebildet, höher angeordnet als die obere Eintrittsfläche des Getränkeauslasses 5.

Der Gasauslass 6 ist hier im Wesentlichen mittig in der Kartuschenaufnahme 1 vorgesehen, kann aber auch beispielsweise in einem Randbereich angeordnet sein. Die hier gezeigte Anordnung ist jedoch vorteilhaft, da ohnehin erwünscht ist, dass im Sinne einer vollständigen Vermischung die Flüssigkeit und die Getränkesubstanz einen möglichst langen Weg zwischen der Fluidzuführung 4 und dem Getränkeauslass 6 zurücklegen und somit der mittige Bereich zwischen Dornführung 8 und Getränkeauslass 5 vorteilhafterweise zur Verfügung steht.

Allerdings kann es je nach Bedingungen und Parametern der Getränkezubereitung dazu kommen, dass die Dichtfolie 19 durch die Schwerkraft und/oder den im Reservoir herrschenden Druck nicht vollständig horizontal ausgerichtet ist, sondern in Richtung der Mischkammer gewölbt ist. Der Fachmann versteht, dass gerade bei der hier vorgeschlagenen, mittigen Anordnung des Gasauslasses 6 die obere Eintrittsöffnung des Gasauslasses 6 in dem Bereich der maximalen Wölbung der Dichtfolie 19 liegt. Damit dennoch stets eine ausreichend große Öffnung zur Verfügung steht, über die freigesetztes Gas entweichen kann, weist der Gasauslass 6 auf seinem oberen Umfang wenigstens ein Abstandsmittel 12 auf, hier beispielsweise wenigstens ein kreisbogenabschnittsförmiger Vorsprung, der gegebenenfalls die gewölbte Dichtfolie 19 kontaktiert und somit einen Mindestabstand und folglich einen minimalen freien Öffnungsquerschnitt zwischen der Eintrittsöffnung des Gasauslasses 6 und der Dichtfolie 19 gewährleistet. Gemäß der hier dargestellten, beispielhaften Ausführungsform beträgt der Abstand zwischen dem oberen Ende des Gasauslasses 6 und einer gedachten horizontalen Dichtfolie 19 wenigstens 0,40mm, insbesondere wenigstens 0,45 oder 0,50mm.

In **Figur 2** ist ein weiterer schematischer Querschnitt einer Kartuschenaufnahme 1 dargestellt. Dabei entspricht die Kartuschenaufnahme 1 hier im Wesentlich der im Zusammenhang mit Figur 1 erläuterten Ausführungsform, so dass auf die diesbezüglichen Ausführungen verwiesen wird.

Hier ist die Kartuschenaufnahme 1 um 180° gedreht dargestellt, d.h. die Fluidzuführung 4 und der Druckluftanschluss 9 sind hier links in der Zeichnung dargestellt. Ferner ist hier nun auch der Aufstechdorn 14 in der Dornführung 8 angeordnet, wobei der Aufstechdorn 14 hier beispielhaft in der ausgefahrenen Position dargestellt ist. In diesem ist, wie in der Zeichnung ersichtlich ist, eine Fluidverbindung zwischen dem Druckluftanschluss 9 und dem Druckluftauslass 10 durch die Druckluftleitung 11 realisiert. In der dargestellten Position hätte der Aufstechdorn 14 also bei einem montierten Kartuschensystem die Dichtfolie 19 durchstoßen, die Getränkesubstanz würde, unterstützt von der in die Kartusche 16 eingebrachten Druckluft, von dem Reservoir 17 in die Mischkammer überführt. An dem Aufstechdorn 14 ist ferner im oberen, linken Bereich, ein Kanal angedeutet, über den die Getränkesubstanz vorteilhafterweise in die Mischkammer fließen kann. Dieser Kanal ist besonders bevorzugt nach außen hin geöffnet, also nutförmig ausgebildet.

Ferner ist in Figur 2 dargestellt, dass der Aufstechdorn 14 vorzugsweise eine Spitze und eine schräg angeordnete Fläche aufweist, die ein Perforieren der Dichtfolie 19 unterstützen. Der Druckluftauslass 10 ist vorzugsweise in der vorgenannten Fläche vorgesehen und insbesondere mittig in dem Aufstechdorn 14.

An seinem unteren Ende in der Zeichnung weist der Aufstechdorn 14 einen hier als Vertiefung ausgeführten Bereich auf, in welchem ein Aktuatorelement 23 der Getränkezubereitungsmaschine eingreift, um den Aufstechdorn 14 von der eingefahrenen in die ausgefahrene Position zu überführen. Dieser Bereich ist vorzugsweise nach oben, also in Richtung der Spitze des Aufstechdorns 14, hin wenigstens abschnittsweise zulaufend ausgebildet, um somit eine einfache Zentrierung des Aktuatorelements 23 zu ermöglichen, wodurch ein Verkanten des Aufstechdorns 14 in der Dornführung 8 und daraus resultierend eine mögliche Beschädigung des Kartuschensystems und/oder der Getränkezubereitungsmaschine, vermieden wird.

Vorliegend ist der untere Endbereich der Kartuschenaufnahme 1 schräg vorgesehen, dies ist jedoch vorrangig eine ästhetische Entscheidung, es wäre beispielsweise auch ein im Wesentlichen horizontal angeordneter Endbereich möglich, der insbesondere parallel zu der durch den Verbindungsbereich und insbesondere die obere umlaufende Kante definierten Öffnungsebene ausgerichtet ist.

Hier weisen der Gasauslass 6 und der Getränkeauslass 5 im Wesentlichen einen kreisförmigen Querschnitt auf, wobei im Falle des Getränkeauslasses 5 ein kleiner Bereich ausgenommen ist, der durch den Residuumauslass 7 eingenommen wird. Der Fachmann versteht jedoch, dass prinzipiell auch andere Querschnitte, beispielsweise ovalförmige oder vieleckige Querschnitte möglich sind.

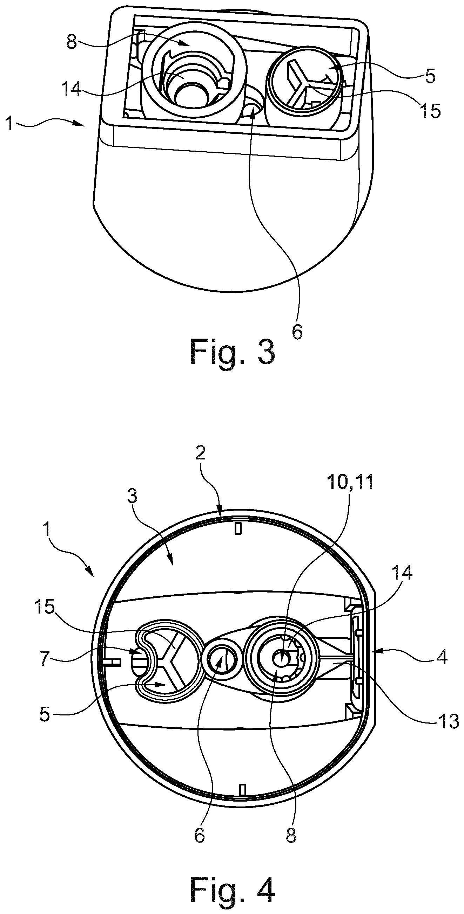

In **Figur 3** ist eine perspektivische Aufsicht einer Kartuschenaufnahme 1 gezeigt.

Zu sehen ist dabei insbesondere die hier lediglich beispielhafte Formgebung der Kartuschenaufnahme 1. Diese weist an ihrem oberen Ende, welches dem unteren Ende gemäß der Darstellungen in den Figuren 1 und 2 entspricht, einen wandartigen rechteckigen Randbereich auf, innerhalb welches der Getränkeauslass 5, der Gasauslass 6 und die Dornführung 8 angeordnet sind.

Von diesem Bereich ausgenommen weist die Kartuschenaufnahme 1 hier im Wesentlichen eine Kuppelform auf, d.h. sie ist grundsätzlich an ihrem der Öffnung gegenüberliegenden Ende gerundet ausgebildet.

In Figur 3 ist insbesondere erkennbar, dass der Gasauslass 6 verglichen mit dem Getränkeauslass 5 und insbesondere auch mit der Dornführung, einen geringeren Öffnungsquerschnitt aufweist.

Ferner ist in Figur 3 in dem Getränkeauslass 5 ein Strahlformelement 15 dargestellt, welches hier rippen- und kreuzförmig ausgebildet ist. Die Länge des Getränkeauslasses 5, dessen Querschnitt und das Strahlformelement 15 zusammen dienen dazu den austretenden Getränkestrahl zu formen und/oder zu richten.

Der Gasauslass 6 weist im Vergleich zu dem Getränkeauslass 5 einen geringeren Abstand zur Dichtfolie 19 auf, damit nur Gas aus dem Gasauslass 6 austreten kann. Das Gas kann jedoch beliebig aus dem Gasauslass 6 strömen, so dass der Gasauslass 6 keine derartigen Strahlformelemente aufweisen muss. Auch ist eine gewisse Mindestlänge des Gasauslasses 6 nicht maßgeblich, so dass dieser, wie hier dargestellt, eine einfache und insbesondere im Vergleich mit der Dornführung 8 und/oder dem Getränkeauslass 5 eine niedrigere Öffnung (gemäß der hier dargestellten Orientierung) aufweist.

In **Figur 4** ist nun eine Aufsicht auf die Kartuschenaufnahme 1 von der Seite des Verbindungsbereichs 2 aus dargestellt. Auch diese Ausführungsform entspricht im Wesentlichen den bereits zuvor erläuterten Ausführungsformen, so dass die diesbezüglichen Ausführungen auch hier einschlägig sind. Hier ist insbesondere zu erkennen, dass die Kartuschenaufnahme 1 einen im Wesentlichen kreisrunden Querschnitt aufweist, mit einer Abflachung im Bereich der Fluidzuführung 4 und dem Druckluftanschluss 9, um eine einfachere Kopplung an die Getränkezubereitungsmaschine zu ermöglichen. Insbesondere ist der die Kartuschenaufnahme 1 aufnehmende Bereich der Kartuschenhalterung 24 vorzugsweise derart ausgebildet, dass er die Kartuschenaufnahme 1 form- und/oder kraftschlüssig aufnimmt. Durch den abgeflachten Bereich wird hierdurch in vorteilhafter Weise auch eine Vorzugsorientierung sichergestellt, so dass eine zuverlässige Kopplung an die Getränkezubereitungsmaschine erfolgt.

Gut zu erkennen ist hier die bugartige Formgebung des Strömungsformungselements 13, welcher vorliegend an die Dornführung 8 angeformt ist, wobei das Strömungsformungselement 13, die Dornführung 8, der Verbindungsbereich 2, der Gasauslass 6, der Getränkeauslass 5 und/oder der Residuumauslass 7 vorzugsweise einstückig geformt sind.

Vorzugsweise werden die Kartusche 16 und/oder die Kartuschenaufnahme aus einem Kunststoffmaterial gefertigt, insbesondere mittels eines Injection-Moulding- oder eines Blasverfahrens.

Besonders bevorzugt wird der Aufstechdorn 15 aus den gleichen Materialien und/oder mit den gleichen Verfahren separat hergestellt und dann in die Kartuschenaufnahme 1 eingesetzt. Alternativ wird der Aufstechdorn 15 gleichzeitig mit der Kartuschenaufnahme 1 hergestellt.

In Figur 4 ist zudem die Ausgestaltung des Residuumauslasses 7 erkennbar. Hier weist der Residuumauslass 7 einen im Wesentlichen ovalen Querschnitt auf und von dem im Wesentlichen kreisförmigen Querschnitt des Getränkeauslasses 5 ist ein kreissegmentsförmiger Bereich ausgenommen, in dem der Residuumauslass 7 vorgesehen ist. Mit anderen Worten bilden, abgesehen von einer Trennwand, der Getränkeauslass 5 und der Residuumauslass 7 zusammen einen im Wesentlichen kreisförmigen Querschnitt. Entscheidend ist lediglich, dass im tiefsten Bereich der Mischkammer 3 der Residuumauslass 7 angeordnet ist. Wie hier dargestellt kann dieser stromabwärts dann in den Getränkeauslass 5 übergehen.

Auch der Gasauslass 6 und die Dornführung 8 sind hier beispielhaft durch einen gerundeten Abschnitt verbunden, um die Strömungsverhältnisse in der Mischkammer 3 zu verbessern.

Schließlich sind an mehreren Stellen entlang des Umfangs des Verbindungsbereichs 2 nach innen, d.h. in Richtung der Mischkammer 3 vorstehende Rippen erkennbar, die als Abstandshalter für die Kartusche 16 dienen, so dass eine korrekte Montage, auch gegebenenfalls benutzerseitig, des Kartuschensystems gewährleistet ist.

Schließlich ist aus der Darstellung in Figur 4 erkennbar, dass insbesondere der Residuumauslass 7, der Getränkeauslass 5, der Gasauslass 6, die Dornführung 8 und die Fluidzuführung 4 sowie der Druckluftanschluss 9 im Wesentlichen auf einer gedachten Achse liegen, die hier im Bild von links nach rechts verläuft, und dass die Mischkammer 3 größtenteils beidseitig diese Achse vorgesehen ist.

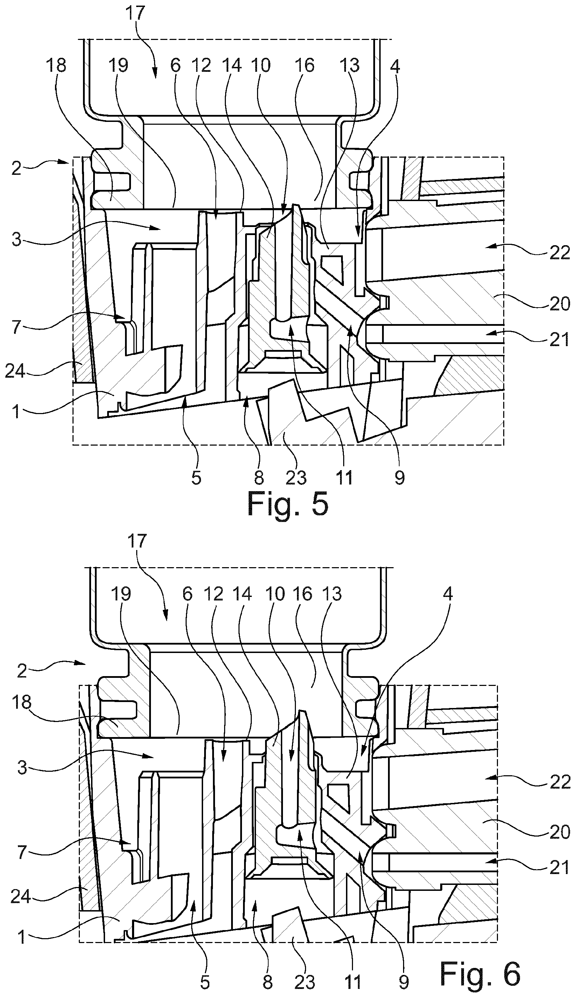

In den **Figuren 5 und 6** sind schematische Querschnitte eines in eine Kartuschenhalterung 24 einer Getränkezubereitungsmaschine eines Getränkezubereitungssystems eingesetzten Kartuschensystems gemäß einer beispielhaften Ausführungsform der vorliegenden Erfindung dargestellt. Dabei unterscheiden sich die Darstellungen darin, dass in Figur 5 der Aufstechdorn 14 gerade mit seiner Spitze die Dichtfolie 19 durchstoßen hat, während in Figur 6 eine zeitlich spätere Position dargestellt ist. Beide Darstellungen zeigen dabei Positionen des Aufstechdorns 14 zwischen der eingefahrenen und der vollständig ausgefahrenen Position.

Auch die in den Figuren 5 und 6 dargestellten Ausführungsformen der Kartuschenaufnahme 1 entsprechen im Wesentlichen den bereits zuvor erläuterten Ausführungsformen, so dass die diesbezüglichen Ausführungen auch hier einschlägig sind.

Vorliegend sind aus Gründen der Übersichtlichkeit die Kartusche 16 und die Getränkezubereitungsmaschine lediglich angedeutet. Die Kartusche 16 ist am oberen Rand der Zeichnung erkennbar und umfasst wenigstens einen Flansch 18, mit dem die Kartusche 16 form- und/oder kraftschlüssig über den Verbindungsbereich 2 mit der Kartuschenaufnahme 1 verbunden ist. Um eine sichere Verbindung zu gewährleisten, insbesondere eine drehfeste Verbindung, kann die Kartusche 16 beispielsweise auch zwei vertikale beabstandete, umlaufende Flansche aufweisen. Auf den Flansch ist die Dichtfolie 19 angesiegelt, die somit das äußerste Element der Kartusche 16 darstellt.

In Figur 5 hat die Spitze des Aufstechdorns 14 gerade die Dichtfolie 19 durchstoßen. Der Druckluftanschluss 9 ist dabei noch nicht fluidisch mit dem Druckluftauslass 10 verbunden und vorzugsweise kann im Wesentlichen noch keine Getränksubstanz von dem Reservoir 17 in die Mischkammer 3 gelangen.

Um die Elemente der Kartuschenaufnahme 1 und ihre jeweiligen Funktionen zu verdeutlichen ist vorliegend das Aktuatorelement 23 der Getränkezubereitungsmaschine beabstandet von dem Aufstechdorn 14 abgebildet, der Fachmann versteht jedoch, dass der Aufstechdorn 14 bevorzugt durch einen dauerhaften Kontakt zwischen einer Aktuatorelementaufnahme des Aufstechdorns 14 und dem Aktuatorelement 23, insbesondere durch eine dauerhafte Kraftbeaufschlagung, hier in vertikaler Richtung nach oben, von der eingefahrenen in die ausgefahrene Position überführt wird.

Weiterhin ist in Figur 5 zu erkennen, dass ein Koppelelement 20 der Getränkezubereitungsmaschine bereits in Kontakt mit der Fluidzuführung 4 und dem Druckluftanschluss 9 gelangt ist, wobei insbesondere Führungsflächen des Koppelelements 20 mit den konischen Flächen der Fluidzuführung 4 und des Druckluftanschlusses 9 zusammenwirken, um eine fluiddichte und sichere Kopplung zu gewährleisten. Das Koppelelement 20 weist hier sowohl eine innere Flüssigkeitsleitung 22 als auch eine innere Druckluftleitung 21 auf, die jeweils indirekt mit einem Flüssigkeitsreservoir der Getränkezubereitungsmaschine oder einer externen Flüssigkeitsversorgung bzw. einer Druckluftquelle der Getränkezubereitungsmaschine oder einer externen Druckluftversorgung verbunden sind. Indirekt meint hier, dass insbesondere zwischen dem Flüssigkeitsreservoir und der Flüssigkeitsleitung 22 weitere Komponenten, wie ein Flüssigkeitskonditionierungssystem, welches beispielsweise dazu vorgesehen ist, die Flüssigkeit, insbesondere Wasser, zu karbonisieren und/oder zu kühlen und unter Druck in die Flüssigkeitsleitung 22 einzubringen. Das karbonisierte und gekühlte Wasser strömt durch die Fluidzuführung 4 in die Mischkammer 3 ein, wobei das Strömungsformungselement 13 dafür sorgt, dass eine weitgehend laminare Strömung aufrechterhalten wird.

In Figur 6 ist der Aufstechdorn 14 derart weit durch die Dichtfolie 19 vorgedrungen, dass der Druckluftauslass 10 innerhalb des Reservoirs 17 angeordnet ist und der auf der Außenseite des Aufstechdorns 14 vorgesehene, insbesondere nutförmige, Kanal einen Weg für die Getränkesubstanz von dem Reservoir 17 in die Mischkammer 3 bereitstellt. Die Druckluftleitung 11 des Aufstechdorns 14 ist bereits teilweise überlappend mit dem Druckluftanschluss 9, so dass eine partielle Fluidverbindung vorliegt und Druckluft aus der maschinenseitigen Druckluftleitung 21 in das Reservoir 17 gelangen kann und dazu beiträgt, die Getränkesubstanz in die Mischkammer 3 zu überführen, wo eine Vermischung mit dem gegebenenfalls karbonisierten und/oder gekühlten Wasser erfolgt, bevor es über den Getränkeauslass 5 in einen darunter angeordneten Getränkebehälter ausgegeben wird. Der Fachmann versteht, dass je nach Getränk die Getränkezubereitungsmaschine mit verschiedenen Parametern betrieben werden kann und/oder die Kartuschenaufnahme 1 entsprechend ausgebildet ist. So ist beispielsweise die Temperatur und/oder der Karbonisierungsgrad des Wassers steuerbar. Weiterhin ist das Verdünnungsverhältnis, insbesondere auch durch einen Benutzer, steuerbar.

Hierzu ist zum einen der Volumenstrom der Flüssigkeit, beispielsweise des Wassers, steuerbar. Aber auch der Volumenstrom der Getränkesubstanz ist steuerbar. Dies kann zum einen über den Volumenstrom der Druckluft erfolgen, zum anderen aber beispielsweise auch über die Anzahl oder die Größe der Kanäle des Aufstechdorns 14 und/oder den durch die Dichtfolie 19 tretenden Durchmessers des Aufstechdorns 14.

Erfindungsgemäß wird während der Zubereitung freigesetztes Gas, im Falle von karbonisiertem Wasser insbesondere Kohlenstoffdioxid, über den Gasauslass 6 aus der Kartuschenaufnahme 1 in die Umgebung ausgeleitet.

### Bezugszeichenliste

- 1: Kartuschenaufnahme
- 2: Verbindungsbereich
- 3: Mischkammer
- 4: Fluidzuführung
- 5: Getränkeauslass
- 6: Gasauslass
- 7: Residuumauslass
- 8: Dornführung
- 9: Druckluftanschluss
- 10: Druckluftauslass
- 11: Druckluftleitung
- 12: Abstandsmittel
- 13: Strömungsformungselement
- 14: Aufstechdorn
- 15: Strahlformelement
- 16: Kartusche
- 17: Reservoir
- 18: Flansch
- 19: Dichtfolie
- 20: Koppelelement
- 21: Druckluftleitung (maschinenseitig)
- 22: Flüssigkeitsleitung (maschinenseitig)
- 23: Aktuatorelement
- 24: Kartuschenhalterung

## Patentansprüche

1. Kartuschenaufnahme (1) zur Herstellung eines Getränks mittels einer Kartusche (16) die ein mit einer Getränkesubstanz gefülltes und durch ein Dichtelement, insbesondere eine Dichtfolie (19), abgeschlossenes Reservoir (17) umfasst, wobei die Kartuschenaufnahme (1) einen Verbindungsbereich (2) aufweist zum Verbinden mit der Kartusche (16) und wobei die Kartuschenaufnahme (1) mit der Kartusche (16) in eine Getränkezubereitungsmaschine einsetzbar ist, wobei die Kartuschenaufnahme (1) eine mit dem Reservoir (17) in Fluidverbindung bringbare Mischkammer (3) und eine in die Mischkammer (3) mündende Fluidzuführung (4) zum Einleiten von Flüssigkeit in die Mischkammer (3) aufweist, wobei die Kartuschenaufnahme (1) eine Kartuschenentladeeinrichtung zum zumindest teilweisen Überführen der Getränkesubstanz vom Reservoir (17) in die Mischkammer (3) aufweist, wobei die Kartuschenaufnahme (1) einen Getränkeauslass (5) aufweist zum Ausleiten eines Getränks aus der Mischkammer (3), insbesondere unmittelbar, in einen Getränkebehälter, wobei die Kartuschenaufnahme (1) ferner einen Gasauslass (6) zum Ausleiten eines in der Mischkammer (3) freigesetzten Gases, insbesondere Kohlenstoffdioxid, aus der Kartuschenaufnahme (1) aufweist, **dadurch gekennzeichnet, dass** eine obere Eintrittsfläche des Gasauslasses (6) höher angeordnet als eine obere Eintrittsfläche des Getränkeauslasses (5) ist.

2. Kartuschenaufnahme (1) nach Anspruch 1, **dadurch gekennzeichnet, dass** der Gasauslass (6) und/oder der Getränkeauslass (5) im Wesentlichen kanalförmig, insbesondere längserstreckt, ausgebildet ist und/oder dass die Fluidzuführung (4) eine Fluidzuführungsöffnung ist, die zur Herstellung einer Fluidverbindung mit einer Fluidleitung der Getränkezubereitungsmaschine ausgebildet ist.

3. Kartuschenaufnahme (1) nach einem der vorhergehenden Ansprüche, **dadurch gekennzeichnet, dass** der Gasauslass (6) im Wesentlichen mittig in der Kartuschenaufnahme (1) angeordnet ist.

4. Kartuschenaufnahme (1) nach einem der vorhergehenden Ansprüche, **dadurch gekennzeichnet, dass** eine Öffnung des Getränkeauslasses (5) größer ist als eine Öffnung des Gasauslasses (6), wobei der Getränkeauslass (5) insbesondere wenigstens abschnittsweise eine größere Querschnittsfläche aufweist als der Gasauslass (6).

5. Kartuschenaufnahme (1) nach einem der vorhergehenden Ansprüche, **dadurch gekennzeichnet, dass** die Kartuschenentladeeinrichtung einen Druckluftanschluss (9) und eine Druckluftleitung (11) umfasst, welche sich vom Druckluftanschluss (9) zu einem Druckluftauslass (10) erstreckt, wobei der Druckluftauslass (10) insbesondere in Richtung des Reservoirs (17) der Kartusche vorsteht, wobei der Druckluftanschluss (9) dazu ausgebildet ist, Druckluft in das Reservoir (17) einzuleiten, wobei die Kartuschenentladeeinrichtung derart ausgebildet ist, dass die Getränkesubstanz durch die Druckluft aus dem Reservoir (17) in die Mischkammer (3) überführbar ist.

6. Kartuschenaufnahme (1) nach einem der vorhergehenden Ansprüche, **dadurch gekennzeichnet, dass** die Kartuschenentladeeinrichtung eine Dornführung (8) und einen innerhalb der Dornführung (8), insbesondere in einer Richtung, verschiebbar gelagerten Aufstechdorn (14) umfasst, wobei der Aufstechdorn (14) zwischen einer eingefahrenen Position, in welcher der Aufstechdorn (14) von dem Dichtelement beabstandet ist, und einer ausgefahrenen Position, in welcher der Aufstechdorn (14) das Dichtelement durchsticht und bis in das Reservoir (17) ragt, insbesondere durch ein Aktuatorelement (23) der Getränkezubereitungsmaschine, verschiebbar ist, wobei vorzugsweise die Druckluftleitung (11) in den Aufstechdorn (14) integriert ist.

7. Kartuschenaufnahme (1) nach einem der vorhergehenden Ansprüche, **dadurch gekennzeichnet, dass** der Gasauslass (6), der Getränkeauslass (5) und/oder die Dornführung (8) einen im Wesentlichen kreisförmigen Querschnitt aufweisen.

8. Kartuschenaufnahme (1) nach einem der vorhergehenden Ansprüche, **dadurch gekennzeichnet, dass** der Gasauslass (6) zwischen der Dornführung (8) und/oder der Fluidzuführung (4) und dem Getränkeauslass (5) angeordnet ist.

9. Kartuschenaufnahme (1) nach einem der vorhergehenden Ansprüche, **dadurch gekennzeichnet, dass** der Getränkeauslass (5) ein Strahlformelement (15) umfasst, wobei das Strahlformelement (15) insbesondere kreuzförmig ausgebildet ist.

10. Kartuschenaufnahme (1) nach einem der vorhergehenden Ansprüche, **dadurch gekennzeichnet, dass** sie in einem der Fluidzuführung (4) zugewandten Bereich ein Strömungsformungselement (13) aufweist, um eine laminare Strömung einer durch die Fluidzuführung (4) in die Mischkammer (3) geleiteten Flüssigkeit zu gewährleisten.

11. Kartuschensystem zur Herstellung eines Getränks, wobei das Kartuschensystem in eine Getränkezubereitungsmaschine einsetzbar ist, mit einer Kartusche (16), die ein mit einer Getränkesubstanz gefülltes Reservoir (17) umfasst, und einer mit der Kartusche (16) verbundene Kartuschenaufnahme (1) gemäß einem der vorhergehenden Ansprüche, wobei die Kartuschenaufnahme (1) und die Kartusche (16) in einem Verbindungsbereich (2) miteinander verbunden sind, wobei die Kartusche (16) eine Kartuschenöffnung aufweist, wobei die Kartuschenöffnung in einem Randbereich ein Dichtelement, insbesondere eine Dichtfolie (19), aufweist, wobei das Dichtelement das Reservoir (17) fluiddicht gegenüber der Kartuschenaufnahme (1) abschließt.

12. Kartuschensystem nach dem vorhergehenden Anspruch, **dadurch gekennzeichnet, dass** der Abstand zwischen der zum Dichtelement weisenden Öffnung des Gasauslasses (6) und dem Dichtelement zwischen 0,1mm und 1,0mm, vorzugsweise zwischen 0,3mm und 0,8mm, insbesondere zwischen 0,4mm und 0,6mm, beträgt.

13. Getränkezubereitungssystem mit einer Getränkezubereitungsmaschine und einem Kartuschensystem nach einem der Ansprüche 11 bis 12, wobei die Getränkezubereitungsmaschine eine, insbesondere balkonartig ausgebildete, Kartuschenhalterung (24) umfasst, in die das Kartuschensystem einsetzbar ist, wobei die Getränkezubereitungsmaschine ferner
ein Flüssigkeitsreservoir, ein Flüssigkeitskonditionierungssystem zum Konditionieren einer Flüssigkeit aus dem Flüssigkeitsreservoir, insbesondere zum Heizen, Kühlen und/oder Karbonisieren der Flüssigkeit, ein Aktuatorelement (23) zur Betätigung der Kartuschenentladevorrichtung, insbesondere des Aufstechdorns (14), ein Fluidzuführungssystem welches mit dem Kartuschensystem koppelbar ist und dazu vorgesehen ist, die konditionierte Flüssigkeit durch die Fluidzuführung in die Mischkammer (3) einzubringen und vorzugsweise Druckluft an dem Druckluftanschluss (9) in die Druckluftleitung (11) einzubringen, und eine Steuerungseinrichtung zum Steuern des Flüssigkeitskonditionierungssystems, des Fluidzuführungssystems und/oder des Aktuatorelements umfasst.

14. Getränkezubereitungssystem nach Anspruch 13, **dadurch gekennzeichnet, dass** die Getränkezubereitungsmaschine ein Verriegelungsmittel aufweist, um das Kartuschensystem in der Kartuschenhalterung (24) reversibel zu verriegeln, wobei das Verriegelungsmittel durch einen Benutzer betätigbar ist.

15. Verfahren zur Zubereitung eines Getränks mit einem Getränkezubereitungssystem nach einem der Ansprüche 13 oder 14, **gekennzeichnet durch** die folgenden Schritte:
- Einsetzen eines aus einer Kartusche (16) und einer Kartuschenaufnahme (1) zusammengesetzten Kartuschensystems in die Kartuschenhalterung (24),
- Herstellen einer Fluidverbindung zwischen dem Fluidzuführungssystem und der Kartuschenaufnahme (1),
- Aktivieren des Aktuatorelements (23) zum Betätigen der Kartuschenentladeeinrichtung, insbesondere durch Überführen des Aufstechdorns (14) von der eingefahrenen Position in die ausgefahrene Position, wodurch ein Perforieren des Dichtmittels bewirkt wird,
- Überführen der Getränkesubstanz von dem Reservoir (17) der Kartusche (16) in die Mischkammer (3) der Kartuschenaufnahme (1), insbesondere durch Einspeisen von Druckluft in die Kartusche (16) durch den Druckluftanschluss (9),
- Einbringen einer Flüssigkeit in die Mischkammer (3) der Kartuschenaufnahme (1) durch die Fluidzuführung (4) und
- Ableiten des in der Mischkammer (3) durch Vermischung der Getränkesubstanz mit der Flüssigkeit erzeugten Getränks durch den Getränkeauslass (5),
- Ableiten von während der Vermischung freigesetztem Gas, insbesondere Kohlenstoffdioxid, durch den Gasauslass (6).

## Claims

1. Cartridge receptacle (1) for producing a beverage by means of a cartridge (16) which comprises a reservoir (17) which is filled with a beverage substance and which is sealed by a sealing element, in particular a sealing film (19), wherein the cartridge receptacle (1) has a connecting region (2) for connection to the cartridge (16) and wherein the cartridge receptacle (1) with the cartridge (16) can be inserted into a beverage preparation machine, wherein the cartridge receptacle (1) has a mixing chamber (3) which can be brought into a fluidic connection with the reservoir (17), and a fluid supply (4) which opens into the mixing chamber (3) for introducing liquid into the mixing chamber (3), wherein the cartridge receptacle (1) has a cartridge discharge device for at least partially transferring the beverage substance from the reservoir (17) into the mixing chamber (3), wherein the cartridge receptacle (1) has a beverage outlet (5) for discharging a beverage out of the mixing chamber (3), in particular directly, into a beverage container, wherein the cartridge receptacle (1) also has a gas outlet (6) for discharging out of the cartridge receptacle (1) a gas, in particular carbon dioxide, released in the mixing chamber (3), **characterized in that** an upper inlet surface of the gas outlet (6) is arranged higher than an upper inlet surface of the beverage outlet (5).

2. Cartridge receptacle (1) according to Claim 1, **characterized in that** the gas outlet (6) and/or the beverage outlet (5) is configured to be substantially channel-shaped, in particular elongated, and/or **in that** the fluid supply (4) is a fluid supply opening which is configured for producing a fluidic connection with a fluid line of the beverage preparation machine.

3. Cartridge receptacle (1) according to one of the preceding claims, **characterized in that** the gas outlet (6) is arranged substantially centrally in the cartridge receptacle (1).

4. Cartridge receptacle (1) according to one of the preceding claims, **characterized in that** an opening of the beverage outlet (5) is larger than an opening of the gas outlet (6), wherein the beverage outlet (5) has a larger cross-sectional surface than the gas outlet (6), in particular at least in some portions.

5. Cartridge receptacle (1) according to one of the preceding claims, **characterized in that** the cartridge discharge device comprises a compressed air connection (9) and a compressed air line (11) which extends from the compressed air connection (9) to a compressed air outlet (10), wherein the compressed air outlet (10) protrudes, in particular, in the direction of the reservoir (17) of the cartridge, wherein the compressed air connection (9) is configured to introduce compressed air into the reservoir (17), wherein the cartridge discharge device is configured such that the beverage substance can be transferred by the compressed air from the reservoir (17) into the mixing chamber (3).

6. Cartridge receptacle (1) according to one of the preceding claims, **characterized in that** the cartridge discharge device comprises a pin guide (8) and a piercing pin (14) which is mounted so as to be displaceable inside the pin guide (8), in particular in one direction, wherein the piercing pin (14) is displaceable, in particular by an actuator element (23) of the beverage preparation machine, between a retracted position in which the piercing pin (14) is spaced apart from the sealing element and an extended position in which the piercing pin (14) pierces the sealing element and protrudes into the reservoir (17), wherein the compressed air line (11) is preferably integrated in the piercing pin (14).

7. Cartridge receptacle (1) according to one of the preceding claims, **characterized in that** the gas outlet (6), the beverage outlet (5) and/or the pin guide (8) have a substantially circular cross section.

8. Cartridge receptacle (1) according to one of the preceding claims, **characterized in that** the gas outlet (6) is arranged between the pin guide (8) and/or the fluid supply (4) and the beverage outlet (5).

9. Cartridge receptacle (1) according to one of the preceding claims, **characterized in that** the beverage outlet (5) comprises a jet shaping element (15), wherein the jet shaping element (15) is configured, in particular, in the shape of a cross.

10. Cartridge receptacle (1) according to one of the preceding claims, **characterized in that** it has a flow shaping element (13) in a region facing the fluid supply (4) in order to ensure a laminar flow of a liquid conducted through the fluid supply (4) into the mixing chamber (3).

11. Cartridge system for producing a beverage, wherein the cartridge system can be inserted into a beverage preparation machine, having a cartridge (16) which comprises a reservoir (17) which is filled with a beverage substance, and a cartridge receptacle (1) which is connected to the cartridge (16) according to one of the preceding claims, wherein the cartridge receptacle (1) and the cartridge (16) are connected together in a connecting region (2), wherein the cartridge (16) has a cartridge opening, wherein the cartridge opening in an edge region has a sealing element, in particular a sealing film (19), wherein the sealing element seals the reservoir (17) in a fluid-tight manner relative to the cartridge receptacle (1).

12. Cartridge system according to the preceding claim, **characterized in that** the spacing between the opening of the gas outlet (6) facing the sealing element and the sealing element is between 0.1 mm and 1.0 mm, preferably between 0.3 mm and 0.8 mm, in particular between 0.4 mm and 0.6 mm.

13. Beverage preparation system comprising a beverage preparation machine and a cartridge system according to one of Claims 11 to 12, wherein the beverage preparation machine comprises a cartridge holder (24) which is configured, in particular, to protrude forward and into which the cartridge system can be inserted, wherein the beverage preparation machine also comprises a liquid reservoir, a liquid conditioning system for conditioning a liquid from the liquid reservoir, in particular for heating, cooling and/or carbonating the liquid, an actuator element (23) for actuating the cartridge discharge device, in particular the piercing pin (14), a fluid supply system which can be coupled to the cartridge system and which is provided to introduce the conditioned liquid through the fluid supply into the mixing chamber (3) and preferably to introduce compressed air at the compressed air connection (9) into the compressed air line (11), and a control device for controlling the liquid conditioning system, the fluid supply system and/or the actuator element.

14. Beverage preparation system according to Claim 13, **characterized in that** the beverage preparation machine has a locking means in order to lock the cartridge system reversibly in the cartridge holder (24), wherein the locking means can be actuated by a user.

15. Method for preparing a beverage with a beverage preparation system according to one of Claims 13 or 14, **characterized by** the following steps:
- inserting a cartridge system composed of a cartridge (16) and a cartridge receptacle (1) into the cartridge holder (24),
- producing a fluidic connection between the fluid supply system and the cartridge receptacle (1),
- activating the actuator element (23) for actuating the cartridge discharge device, in particular by transferring the piercing pin (14) from the retracted position into the extended position, whereby a perforation of the sealing means is brought about,
- transferring the beverage substance from the reservoir (17) of the cartridge (16) into the mixing chamber (3) of the cartridge receptacle (1), in particular by feeding compressed air into the cartridge (16) through the compressed air connection (9),
- introducing a liquid into the mixing chamber (3) of the cartridge receptacle (1) through the fluid supply (4),
- discharging through the beverage outlet (5) the beverage produced in the mixing chamber (3) by mixing the beverage substance with the liquid,
- discharging through the gas outlet (6) gas, in particular carbon dioxide, released during the mixing.

## Revendications

1. Réceptacle de cartouche (1) destiné à produire une boisson au moyen d'une cartouche (16), lequel réceptacle de cartouche comprend un réservoir (17) rempli d'une substance pour boisson et fermé par un élément d'étanchéité, notamment un film d'étanchéité (19), le réceptacle de cartouche (1) comportant une zone de liaison (2) destinée à être reliée à la cartouche (16) et le réceptacle de cartouche (1) pourvu de la cartouche (16) pouvant être inséré dans une machine de préparation de boissons, le réceptacle de cartouche (1) comportant une chambre de mélange (3) qui peut être reliée fluidiquement au réservoir (17) et une alimentation en fluide (4) qui débouche dans la chambre de mélange (3) et qui est destinée à introduire du liquide dans la chambre de mélange (3), le réceptacle de cartouche (1) comportant un dispositif de déchargement de cartouche destiné à transférer au moins partiellement la substance pour boisson du réservoir (17) jusque dans la chambre de mélange (3), le réceptacle de cartouche (1) comportant une sortie de boisson (5) destinée à évacuer une boisson de la chambre de mélange (3), en particulier directement, jusque dans un récipient à boisson, le réceptacle de cartouche (1) comportant en outre une sortie de gaz (6) destinée à évacuer du réceptacle de cartouche (1) un gaz libéré dans la chambre de mélange (3), en particulier du dioxyde de carbone, **caractérisé en ce qu'**une surface d'entrée supérieure de la sortie de gaz (6) est disposée plus haut qu'une surface d'entrée supérieure de la sortie de boisson (5).

2. Réceptacle de cartouche (1) selon la revendication 1, **caractérisé en ce que** la sortie de gaz (6) et/ou la sortie de boisson (5) est sensiblement en forme de canal, notamment allongée longitudinalement, et/ou **en ce que** l'alimentation en fluide (4) est une ouverture d'alimentation en fluide qui est conçue pour établir une liaison fluidique avec une conduite de fluide de la machine de préparation de boissons.

3. Réceptacle de cartouche (1) selon l'une des revendications précédentes, **caractérisé en ce que** la sortie de gaz (6) est disposée sensiblement au milieu dans le réceptacle de cartouche (1).

4. Réceptacle de cartouche (1) selon l'une des revendications précédentes, **caractérisé en ce qu'**une ouverture de la sortie de boisson (5) est plus grande qu'une ouverture de sortie de gaz (6), la sortie de boisson (5) ayant, en particulier au moins par portions, une aire en coupe transversale supérieure à celle de la sortie de gaz (6).

5. Réceptacle de cartouche (1) selon l'une des revendications précédentes, **caractérisé en ce que** le dispositif de déchargement de cartouche comprend un raccord d'air comprimé (9) et une conduite d'air comprimé (11) qui s'étend du raccord d'air comprimé (9) à une sortie d'air comprimé (10), la sortie d'air comprimé (10) faisant saillie notamment en direction du réservoir (17) de la cartouche, le raccord d'air comprimé (9) étant conçu pour introduire de l'air comprimé dans le réservoir (17), le dispositif de déchargement de cartouche étant conçu de telle sorte que la substance de boisson puisse être transférée du réservoir (17) jusque dans la chambre de mélange (3) par l'air comprimé.

6. Réceptacle de cartouche (1) selon l'une des revendications précédentes, **caractérisé en ce que** le dispositif de déchargement de cartouche comprend un guide de mandrin (8) et un mandrin de perçage (14) qui est monté de manière coulissante à l'intérieur du guide de mandrin (8), notamment dans une direction, le mandrin de perçage (14) pouvant coulisser, en particulier par le biais d'un élément d'actionnement (23) de la machine de préparation de boissons, entre une position rétractée, dans laquelle le mandrin de perçage (14) est espacé de l'élément d'étanchéité, et une position déployée dans laquelle le mandrin de perçage (14) transperce l'élément d'étanchéité et fait saillie dans le réservoir (17), la conduite d'air comprimé (11) étant de préférence intégrée dans le mandrin de perçage (14).

7. Réceptacle de cartouche (1) selon l'une des revendications précédentes, **caractérisé en ce que** la sortie de gaz (6), la sortie de boisson (5) et/ou le guide de mandrin (8) ont une section transversale sensiblement circulaire.

8. Réceptacle de cartouche (1) selon l'une des revendications précédentes, **caractérisé en ce que** la sortie de gaz (6) est disposée entre le guide de mandrin (8) et/ou l'alimentation en fluide (4) et la sortie de boisson (5).

9. Réceptacle de cartouche (1) selon l'une des revendications précédentes, **caractérisé en ce que** la sortie de boisson (5) comprend un élément de formation de jet (15), l'élément de formation de jet (15) étant notamment en forme de croix.

10. Réceptacle de cartouche (1) selon l'une des revendications précédentes, **caractérisé en ce qu'**il comporte un élément de formation d'écoulement (13) dans une zone dirigée vers l'alimentation en fluide (4) afin d'assurer un écoulement laminaire d'un liquide amené dans la chambre de mélange (3) par l'alimentation en fluide (4).

11. Système de cartouche destiné à produire une boisson, le système de cartouche pouvant être inséré dans une machine de préparation de boissons, le système de cartouche comprenant une cartouche (16) pourvu d'un réservoir (17) rempli d'une substance de boisson, et un réceptacle de cartouche (1), selon l'une des revendications précédentes, qui est relié à la cartouche (16), le réceptacle de cartouche (1) et la cartouche (16) étant reliés l'un à l'autre dans une zone de liaison (2), la cartouche (16) comportant une ouverture de cartouche, l'ouverture de cartouche comportant dans une zone de bord un élément d'étanchéité, en particulier un film d'étanchéité (19), l'élément d'étanchéité fermant hermétiquement le réservoir (17) de manière étanche aux fluides par rapport au réceptacle de cartouche (1).

12. Système de cartouche selon la revendication précédente, **caractérisé en ce que** la distance entre l'ouverture de la sortie de gaz (6), dirigée vers l'élément d'étanchéité, et l'élément d'étanchéité est comprise entre 0,1 mm et 1,0 mm, de préférence entre 0,3 mm et 0,8 mm, notamment entre 0,4 mm et 0,6 mm.

13. Système de préparation de boissons comprenant une machine de préparation de boissons et un système de cartouche selon l'une des revendications 11 à 12, la machine de préparation de boissons comprenant un support de cartouche (24), notamment de type balcon, dans lequel le système de cartouche peut être inséré, la machine de préparation de boissons comprenant en outre un réservoir de liquide, un système de conditionnement de liquide destiné à conditionner un liquide provenant du réservoir de liquide, notamment chauffer, refroidir et/ou gazéifier le liquide, un élément d'actionnement (23) destiné à actionner le dispositif de déchargement de cartouche, en particulier le mandrin de perçage (14), un système d'alimentation en fluide qui peut être accouplé au système de cartouche et qui est prévu pour introduire le liquide conditionné dans la chambre de mélange (3) par le biais de l'alimentation en fluide et introduire de préférence de l'air comprimé dans la conduite d'air comprimé (11) au niveau du raccord d'air comprimé (9), et un dispositif de commande destiné à commander le système de conditionnement de liquide, le système d'alimentation en fluide et/ou l'élément d'actionnement.

14. Système de préparation de boissons selon la revendication 13, **caractérisé en ce que** la machine de préparation de boissons comporte un moyen de verrouillage destiné à verrouiller de manière réversible le système de cartouche dans le support de cartouche (24), le moyen de verrouillage pouvant être actionné par un utilisateur.

15. Procédé de préparation d'une boisson à l'aide d'un système de préparation de boissons selon l'une des revendications 13 ou 14, **caractérisé par** les étapes suivantes:
- insérer un système de cartouche, composé d'une cartouche (16) et d'un réceptacle de cartouche (1), dans le support de cartouche (24),
- établir une liaison fluidique entre le système d'alimentation en fluide et le réceptacle de cartouche (1),
- activer l'élément d'actionnement (23) afin d'actionner le dispositif de déchargement de cartouche, notamment par transfert du mandrin de perçage (14) de la position rétractée à la position déployée, ce qui provoque une perforation du moyen d'étanchéité,
- transférer la substance pour boisson du réservoir (17) de la cartouche (16) jusque dans la chambre de mélange (3) du réceptacle de cartouche (1), notamment par introduction d'air comprimé dans la cartouche (16) par le biais du raccord d'air comprimé (9),
- introduire un liquide dans la chambre de mélange (3) du réceptacle de cartouche (1) par le biais de l'alimentation en fluide (4) et
- évacuer la boisson, produite dans la chambre de mélange (3) par mélange de la substance pour boisson au liquide, par la sortie de boisson (5),
- évacuer le gaz libéré pendant le mélange, en particulier le dioxyde de carbone, par la sortie de gaz (6) .
